# EUROPEAN PATENT APPLICATION

(11) **EP 4 317 314 A1**
(43) Date of publication of application: **07.02.2024**
(21) Application number: 22775819.0
(22) Date of filing: 25.03.2022
(51) Int. Cl.: C08L 67/00, C08L 69/00, C08L 101/00, B23K 26/00, B29C 65/16, C08K 3/22

(54) **RESIN COMPOSITION, MOLDED ARTICLE, AND USE THEREOF**

(30) Priority: 26.03.2021 JP 2021053962
(71) Applicant: Mitsubishi Chemical Corporation, Chiyoda-ku Tokyo 100-8251 (JP)
(72) Inventor: SUZUKI Takayuki, Hiratsuka-shi, Kanagawa 254-0016 (JP)
(74) Representative: Hoffmann Eitle
(86) International application number: PCT/JP2022/014323
(87) International publication number: WO 2022/203038

(57) **Abstract**

To provide a resin composition excellent in laser transmission properties and laser printability and having suppressed unevenness in transmittance, and a molded article including the resin composition, a laser-transmitting resin member, a kit, a laser-welded article, a method for producing a laser-welded article, and a laser-marking agent for a resin composition for laser welding. A resin composition for laser marking and for laser welding comprising 100 parts by mass of a thermoplastic resin, 0.002 to 10.000 parts by mass of a bismuth compound, and 0.1 to 5.0 parts by mass in total of two or more types of non-black organic pigments.

## Description

### [Technical Field]

The present invention relates to a resin composition that can be used for laser welding and is capable of being laser-marked, and a molded article including the resin composition, a kit, a laser-welded article, a laser-transmitting resin member, and a method for producing a laser-welded article. Furthermore, the present invention relates to a laser-marking agent for a resin composition for laser welding.

### [Background Art]

Thermoplastic polyester resins including polybutylene terephthalate resins are excellent in mechanical strength, chemical resistance, electrical insulating properties, and the like and also have excellent heat resistance, moldability, and recyclability, and they are therefore widely used for various equipment components.

Recently, the number of cases where welding processing is performed for productivity efficiency has increased, and especially laser welding, which has little influence on electronic components, has been frequently used (for example, Patent Literature 1).

Laser welding is a technique in which a laser-transmitting resin member including a laser transmissive material (hereinafter sometimes referred to as a "transmitting resin member"), and a laser-absorbing resin member including a laser light-absorptive material(hereinafter sometimes referred to as an "absorbing resin member") are superposed on each other and irradiated with laser light from the transmitting resin member side to allow the interface thereof with the absorbing resin member to generate heat for welding. Resin compositions applied to molded articles for such a use are required to have capability of being welded by irradiation with laser light (laser weldability).

On the other hand, in molded articles, product information or others are often printed or drawn on the surfaces of molded articles, for design and the display of information for finished articles, and also distinguishability of the component at the time of assembly, for example. When they are required to maintain their visibility over a long period, laser marking may be used in view of reliability.

Further, in recent years, a study has also been made of a resin composition that can be used as a laser-transmitting resin member in laser welding, the resin composition being capable of being laser-marked (Patent Literature 2).

### [Citation List]

### [Patent Literature]

[Patent Literature 1] Japanese Patent No. 6183822
[Patent Literature 2] Japanese Patent Laid-Open No. 2020-050822

### [Summary of Invention]

### [Technical Problem]

In laser welding, the transmitting resin member preferably has laser light transmittance as high as possible, and conversely the absorbing resin member is desirably colored with a pigment or the like in order to increase the laser light absorptance.
On the other hand, in view of the designability of the laser-welded article that is to be laser-welded, the transmitting resin member is also preferably colored with a color similar to that of the absorbing resin member, and, for example, the absorbing resin member and the transmitting resin member may be colored black.

However, when the transmitting resin member is colored with a pigment having high laser light absorptance, like the absorbing resin member, laser light is not transmitted, and laser welding is impossible. Therefore, for the transmitting resin member, coloring matter is used that inhibits the transmission of laser light as little as possible.

On the other hand, when a transmitting resin member is subjected to laser marking, it cannot be marked if laser light is transmitted. Accordingly, a resin composition is also needed that is capable of being laser-marked while transmitting laser light to some extent. Even if laser marking and laser welding are possible, suitable laser marking and laser welding cannot be performed if the laser printability is poor, or the transmittance is uneven.

Under such circumstances, an object of the present invention is to provide a resin composition excellent in laser transmission properties and laser printability and having suppressed unevenness in transmittance, and a molded article including the resin composition, a kit, a laser-welded article, and a method for producing a laser-welded article. Furthermore, an object of the present invention is to provide a laser-marking agent for a resin composition for laser welding.

### [Solution to Problem]

The present inventors discovered that the above problems could be solved by using a bismuth compound, and two or more types of non-black organic pigments in a thermoplastic resin under the above problems.

Specifically, the problems described above are solved by the following means.
<1> A resin composition for laser marking and for laser welding, comprising 100 parts by mass of a thermoplastic resin, 0.002 to 10.000 parts by mass of a bismuth compound, and 0.1 to 5.0 parts by mass in total of two or more types of non-black organic pigments.
<2> The resin composition according to <1>, wherein a content of the bismuth compound is 0.002 to 1.000 part by mass per 100 parts by mass of the thermoplastic resin.
<3> The resin composition according to <1> or <2>, wherein the thermoplastic resin comprises a thermoplastic polyester resin.
<4> The resin composition according to any one of <1> to <3>, wherein the thermoplastic resin comprises a polybutylene terephthalate resin.
<5> The resin composition according to <4>, wherein the polybutylene terephthalate resin comprises a unit derived from isophthalic acid, and a proportion of the unit derived from isophthalic acid in all units derived from dicarboxylic acid components in the polybutylene terephthalate resin is 0.5 mol % or more and 15 mol % or less.
<6> The resin composition according to any one of <1> to <5>, wherein the thermoplastic resin comprises a polycarbonate resin.
<7> The resin composition according to any one of <1> to <6>, wherein the resin composition is for a laser-transmitting resin member.
<8> The resin composition according to any one of <1> to <7>, wherein a mass ratio between a content of the two or more types of non-black organic pigments and the content of the bismuth compound is 1:0.05 to 10.
<9> The resin composition according to any one of <1> to <8>, wherein a mixture of the two or more types of non-black organic pigments has an absorbance at a wavelength of 1064 nm of 1.0 or less and an absorbance at a wavelength of 500 nm of 1.0 or more.
<10> The resin composition according to any one of <1> to <9>, further comprising, per 100 parts by mass of the thermoplastic resin, 0.1 to 18 parts by mass of an aromatic ring-containing compound having a benzene ring and/or a benzo condensed ring.
<11> The resin composition according to <10>, wherein the aromatic ring-containing compound is a compound comprising an epoxy group.
<12> The resin composition according to <10>, wherein the aromatic ring-containing compound is a novolac type epoxy compound.
<13> The resin composition according to any one of <1> to <12>, further comprising glass fibers, wherein cross sections of the glass fibers are circular.
<14> A molded article formed from the resin composition according to any one of <1> to <13>.
<15> A laser-transmitting resin member formed from the resin composition according to any one of <1> to <13>.
<16> The molded article according to <14>, wherein the molded article is capable of being laser-marked.
<17> The laser-transmitting resin member according to <15>, wherein the laser-transmitting resin member is capable of being laser-marked.
<18> A kit comprising:
   the resin composition according to any one of <1> to <13>; and
   a light-absorptive resin composition comprising a thermoplastic resin and light-absorptive coloring matter.
<19> A laser-welded article obtained by laser-welding together the laser-transmitting resin member according to <15> or <17>, and a laser-absorbing resin member formed from a light-absorptive resin composition comprising a thermoplastic resin and light-absorptive coloring matter.
<20> A method for producing a laser-welded article, comprising:
   irradiating the laser-transmitting resin member according to <15> or <17> with a laser to laser-mark the laser-transmitting resin member, and
   laser-welding together the laser-transmitting resin member and a laser-absorbing resin member formed from a light-absorptive resin composition comprising a thermoplastic resin and light-absorptive coloring matter.
<21> The method for producing a laser-welded article according to <20>, wherein the laser welding is performed by galvano-scanning laser welding.
<22> A laser-marking agent for a resin composition for laser welding comprising a thermoplastic resin and two or more types of non-black organic pigments,
   the laser-marking agent comprising a bismuth compound.

### [Advantageous Effects of Invention]

The present invention can provide a resin composition excellent in laser transmission properties and laser printability and having suppressed unevenness in transmittance, and a molded article including the resin composition, a laser-transmitting resin member, a kit, a laser-welded article, and a method for producing a laser-welded article. Furthermore, the present invention can provide a laser-marking agent for a resin composition for laser welding.

### [Brief Description of Drawings]

[Figure 1] Figure 1 shows schematic views showing a test piece (transmitting resin member I) for measuring laser welding strength in Examples.
[Figure 2] Figure 2 shows schematic views showing a test piece (absorbing resin member II) for measuring laser welding strength in Examples.
[Figure 3] Figure 3 shows schematic views showing a test piece (a combination of the transmitting resin member I and the absorbing resin member II) for measuring laser welding strength in Examples.
[Figure 4] Figure 4 is a schematic view showing a method for measuring laser welding strength in Examples.

### [Description of Embodiment]

A mode for carrying out the present invention (hereinafter simply referred to as "this embodiment") will be described in detail below. This embodiment below is an illustration for describing the present invention, and the present invention is not limited to only this embodiment.

As used herein, "to" is used in the sense of including the numerical values described before and after it as the lower limit value and the upper limit value, respectively.

As used herein, various physical property values and characteristic values are at 23°C unless otherwise noted.

As used herein, weight average molecular weight and number average molecular weight are polystyrene-equivalent values measured by a GPC (gel permeation chromatography) method.

For the standards shown herein, when the measurement methods and the like differ depending on the year, they are based on the standards as of January 1, 2021, unless otherwise noted.

The resin composition of this embodiment is characterized in that it is a resin composition for laser marking and for laser welding including 100 parts by mass of a thermoplastic resin, 0.002 to 10.000 parts by mass of a bismuth compound, and 0.1 to 5.0 parts by mass in total of two or more types of non-black organic pigments.

By such a configuration, a resin composition excellent in laser transmission properties and laser printability and having suppressed unevenness in transmittance is obtained.

In this embodiment, by using a bismuth compound, a resin composition capable of being laser-marked and capable of being laser-welded is obtained. That is, the bismuth compound functions as a laser-marking agent and, on the other hand, does not decrease the transmittance of the resin composition much. Therefore, even if two or more types of non-black organic pigments are blended into a resin composition including a thermoplastic resin and a bismuth compound, a decrease in laser transmission properties can be effectively suppressed. Therefore, the resin composition of this embodiment can have a color. That is, the colors of a transmitting resin member and an absorbing resin member in laser welding can be matched to improve the design appearance.

Furthermore, generally, in a molded article of a resin composition, there is a tendency that the transmittance on the side opposite to the gate increases. It is presumed that this is because on the gate side, the thermal history increases, and, for example, crystallization proceeds to decrease the transmittance. When the difference between the transmittance on the side opposite to the gate and on the gate side is large, the unevenness in the transmittance of the molded article increases. When the unevenness in the transmittance of the molded article is large, laser welding unevenness occurs. In this embodiment, by blending a bismuth compound and two or more types of non-black organic pigments, unevenness is suppressed. For this, it is presumed that the organic pigments and the bismuth compound can serve as nucleating agents to promote crystallization to decrease the difference between the thermal histories on the gate side and on the side opposite to the gate.

Further, in the resin composition of this embodiment, pigments rather than dyes are used as coloring matter, and therefore it is possible to use no dyes or decrease the content of dyes. Therefore, contamination resistance resulting from dyes can be effectively suppressed or reduced. As a result, problems such as the fading of laser-marking letters can also be avoided. Furthermore, the resin composition of this embodiment is capable of being marked even with black or white by using a bismuth compound, and therefore can be preferably used for a black or white resin composition for laser welding on the transmitting resin member side, the resin composition being for laser marking.

Further, when bismuth oxide is used as the bismuth compound, the melted and kneaded material of the thermoplastic resin and bismuth oxide is white, and therefore the resin composition of this embodiment can also be used as a white molded article and a chromatic molded article in which chromatic coloring matter is blended, in addition to a case where the resin composition of this embodiment is colored black.

Usually, dyes dissolve in water and/or organic solvents, but pigments do not dissolve in water and organic solvents.

### <Thermoplastic Resin>

The resin composition of this embodiment includes a thermoplastic resin. The thermoplastic resin may be a crystalline thermoplastic resin or a noncrystalline thermoplastic resin. In this embodiment, the resin composition of this embodiment preferably includes at least a crystalline thermoplastic resin, and 30% by mass or more of the thermoplastic resin is preferably a crystalline thermoplastic resin. By such a configuration, an effect as a nucleating agent when a bismuth compound is added is more effectively exerted.

Examples of the thermoplastic resin include thermoplastic polyester resins, polycarbonate resins, aromatic vinyl-based resins, acrylic resins, polyacetal resins, polyphenylene oxide resins, polyphenylene sulfide resins, polysulfone resins, polyethersulfone resins, polyetherimide resins, polyetherketone resins, polyolefin resins, and polyamide resins. Thermoplastic polyester resins, polycarbonate resins, and aromatic vinyl-based resins are preferred, thermoplastic polyester resins and/or polycarbonate resins are more preferred, and thermoplastic polyester resins are further preferred.

Part of the thermoplastic resin included in the resin composition of this embodiment may have the function of an elastomer.

In a first example of the thermoplastic resin, the thermoplastic resin includes a thermoplastic polyester resin.

Further, in the first example of the thermoplastic resin, the thermoplastic polyester resin preferably includes a polybutylene terephthalate resin. When the thermoplastic polyester resin includes a polybutylene terephthalate resin, there is a tendency that the effects of the present invention are more effectively exerted.

In the first example, the content of the thermoplastic polyester resin of the thermoplastic resin included in the resin composition is preferably 80% by mass or more, more preferably 85% by mass or more, further preferably 90% by mass or more, still more preferably 95% by mass or more, and still further preferably 97% by mass or more.

In a second example of the thermoplastic resin, the thermoplastic resin includes a thermoplastic polyester resin and further includes a polycarbonate resin. When the thermoplastic resin includes a polycarbonate resin, there is a tendency that the laser transmittance of the molded article increases. In the second example, further, the thermoplastic polyester resin preferably includes a polybutylene terephthalate resin. In the second example, the mass ratio between the thermoplastic polyester resin and the polycarbonate resin is preferably 51 to 99:49 to 1, more preferably 60 to 95:40 to 5, further preferably 70 to 90:30 to 10, and still more preferably 75 to 85:25 to 15.

In the second example, the total content of the thermoplastic polyester resin and the polycarbonate resin of the thermoplastic resin included in the resin composition is preferably 80% by mass or more, more preferably 85% by mass or more, further preferably 90% by mass or more, still more preferably 95% by mass or more, and still further preferably 97% by mass or more.

In a third example of the thermoplastic resin, the thermoplastic resin further includes an aromatic vinyl-based resin in the first example or second example. Particularly, the thermoplastic resin includes 5 to 100 parts by mass of an aromatic vinyl-based resin (for example, a butadiene rubber-containing polystyrene resin) per 100 parts by mass of the thermoplastic polyester resin.

In a fourth example of the thermoplastic resin, the thermoplastic resin includes a polyamide resin.

In the fourth example, the content of the polyamide resin of the thermoplastic resin included in the resin composition is preferably 80% by mass or more, more preferably 85% by mass or more, further preferably 90% by mass or more, still more preferably 95% by mass or more, and still further preferably 97% by mass or more. Examples of the polyamide resin include nylon 6 and nylon 66. Semi-aromatic polyamides such as 6T/6I, 9T, polyamide MXD6, polyamide MXD10, and polyamide MP10 (a polyamide synthesized from meta-xylylenediamine, para-xylylenediamine, and sebacic acid) can also be used.

In a fifth example of the thermoplastic resin, the thermoplastic resin includes a polycarbonate resin.

In the fourth example, the content of the polycarbonate resin of the thermoplastic resin included in the resin composition is preferably 80% by mass or more, more preferably 85% by mass or more, further preferably 90% by mass or more, still more preferably 95% by mass or more, and still further preferably 97% by mass or more.

The details of each thermoplastic resin will be described below.

### <<Thermoplastic Polyester Resin>>

The type of the thermoplastic polyester resin used in this embodiment is not particularly limited. Examples thereof include polybutylene terephthalate resins and polyethylene terephthalate resins, and polybutylene terephthalate resins are preferred.

A polybutylene terephthalate resin is a resin obtained by polycondensing terephthalic acid as the main component of an acid component and 1,4-butanediol as the main component of a diol component. The terephthalic acid as the main component of an acid component means that 50% by mass or more of the acid component is terephthalic acid. Preferably 60% by mass or more, more preferably 70% by mass or more, of the acid component is terephthalic acid, and 80% by mass or more, 90% by mass or more, or 95% by mass or more of the acid component may be terephthalic acid. The 1,4-butanediol as the main component of a diol component means that 50% by mass or more of the diol component is 1,4-butanediol.
Preferably 60% by mass or more, more preferably 70% by mass or more, of the diol component is 1,4-butanediol, and 80% by mass or more, 90% by mass or more, or 95% by mass or more of the diol component may be 1,4-butanediol.

When the polybutylene terephthalate resin includes another acid component, examples thereof include isophthalic acid and dimer acid. When the polybutylene terephthalate resin includes another diol component, examples thereof include polyalkylene glycols such as polytetramethylene glycol (PTMG).

When one obtained by copolymerizing polytetramethylene glycol is used as the polybutylene terephthalate resin, the proportion of the tetramethylene glycol component in the copolymer is preferably 3 to 40% by mass, more preferably 5 to 30% by mass, and further preferably 10 to 25% by mass. By setting such a copolymerization proportion, there is a tendency that the balance between laser weldability and heat resistance is better, which is preferred.

When dimer acid-copolymerized polybutylene terephthalate is used as the polybutylene terephthalate resin, the proportion of the dimer acid component in all carboxylic acid components is preferably 0.5 to 30 mol %, more preferably 1 to 20 mol %, and further preferably 3 to 15 mol % in terms of carboxylic acid groups. By setting such a copolymerization proportion, there is a tendency that the balance of laser weldability, long-term heat resistance, and toughness is better, which is preferred.

When the polybutylene terephthalate resin includes a unit derived from isophthalic acid, the proportion of the unit derived from isophthalic acid in all units derived from dicarboxylic acid components in the polybutylene terephthalate resin is preferably 0.5 mol % or more and 15 mol % or less. By setting such a copolymerization proportion, there is a tendency that the balance of laser weldability, heat resistance, injection moldability, and toughness is better, which is preferred.

For the polybutylene terephthalate resin used in this embodiment, a resin in which 90% by mass or more of the acid component and 90% by mass or more of the diol component are terephthalic acid and 1,4-butanediol, respectively (polybutylene terephthalate homopolymer), or a copolymerized polybutylene terephthalate resin obtained by copolymerizing polytetramethylene glycol, or an isophthalic acid-copolymerized polybutylene terephthalate resin is preferred.

The intrinsic viscosity of the polybutylene terephthalate resin is preferably 0.5 to 2 dL/g. In terms of moldability and mechanical characteristics, one having an intrinsic viscosity in the range of 0.6 to 1.5 dL/g is more preferred. By using one having an intrinsic viscosity of 0.5 dL/g or more, there is a tendency that the mechanical strength of the obtained molded article improves more. By using one having an intrinsic viscosity of 2 dL/g or less, there is a tendency that the fluidity of the polybutylene terephthalate resin improves to improve the moldability to thereby improve the laser weldability more.

The intrinsic viscosity is a value measured at 30°C in a 1:1 (mass ratio) mixed solvent of tetrachloroethane and phenol.

When two or more types of polybutylene terephthalate resins are included, the intrinsic viscosity is the intrinsic viscosity of the mixture.

The amount of the terminal carboxy groups of the polybutylene terephthalate resin can be appropriately selected and set, but is usually 60 eq/ton or less, preferably 50 eq/ton or less, and further preferably 30 eq/ton or less. By setting the amount of the terminal carboxy groups at 50 eq/ton or less, the generation of gas during the melting and molding of the polybutylene terephthalate resin can be more effectively suppressed. The lower limit value of the amount of the terminal carboxy groups is not particularly limited, but is usually 5 eq/ton.

When two or more types of polybutylene terephthalate resins are included, the amount of the terminal carboxy groups is the amount of the terminal carboxy groups of the mixture.

The amount of the terminal carboxy groups of the polybutylene terephthalate resin is a value obtained by dissolving 0.5 g of the polybutylene terephthalate resin in 25 mL of benzyl alcohol and titrating with a 0.01 mol/L sodium hydroxide solution in benzyl alcohol. Examples of the method for adjusting the amount of the terminal carboxy groups include any conventionally known method, such as controlling polymerization conditions including the ratio between starting materials used, polymerization temperature, and pressure reduction method in polymerization, and reacting a terminal-blocking agent.

The polyethylene terephthalate resin used in this embodiment is a resin obtained by polycondensing terephthalic acid as the main component of an acid component and ethylene glycol as the main component of a diol component. The terephthalic acid as the main component of an acid component means that 50% by mass or more of the acid component is terephthalic acid. Preferably 60% by mass or more, more preferably 70% by mass or more, of the acid component is terephthalic acid, and 80% by mass or more, 90% by mass or more, or 95% by mass or more of the acid component may be terephthalic acid. The ethylene glycol as the main component of a diol component means that 50% by mass or more of the diol component is ethylene glycol. Preferably 60% by mass or more, more preferably 70% by mass or more, of the diol component is ethylene glycol, and 80% by mass or more, 90% by mass or more, or 95% by mass or more of the diol component may be ethylene glycol.

When the polyethylene terephthalate resin includes another acid component, examples of another acid component include dicarboxylic acids such as phthalic acid, isophthalic acid, naphthalenedicarboxylic acid, 4,4'-diphenyl sulfone dicarboxylic acid, 4,4'-biphenyldicarboxylic acid, 1,4-cyclohexanedicarboxylic acid, 1,3-phenylenedioxydiacetic acid, and structural isomers thereof, malonic acid, succinic acid, and adipic acid, and derivatives thereof, and oxyacids such as p-hydroxybenzoic acid and glycolic acid, or derivatives thereof.

When the polyethylene terephthalate resin includes another acid component, examples of another diol component include aliphatic glycols such as 1,2-propanediol, 1,3-propanediol, 1,4-butanediol, pentamethylene glycol, hexamethylene glycol, and neopentyl glycol, alicyclic glycols such as cyclohexanedimethanol, and aromatic dihydroxy compound derivatives such as bisphenol A and bisphenol S.

Further, the polyethylene terephthalate resin may be one obtained by copolymerizing 1.0 mol % or less, preferably 0.5 mol % or less, and further preferably 0.3 mol % or less of a branched component, for example, a trifunctional acid having ester-forming ability such as tricarballylic acid, trimesic acid, or trimellitic acid, or a tetrafunctional acid having ester-forming ability such as pyromellitic acid, or a trifunctional or tetrafunctional alcohol having ester-forming ability such as glycerin, trimethylolpropane, or pentaerythritol.

The intrinsic viscosity of the polyethylene terephthalate resin is preferably 0.3 to 1.5 dL/g, more preferably 0.3 to 1.2 dL/g, and further preferably 0.4 to 0.8 dL/g.

The intrinsic viscosity of the polyethylene terephthalate resin is a value measured at 30°C in a 1:1 (mass ratio) mixed solvent of tetrachloroethane and phenol.

The concentration of the terminal carboxy groups of the polyethylene terephthalate resin is preferably 3 to 60 eq/ton, more preferably 5 to 50 eq/ton, and further preferably 8 to 40 eq/ton. By setting the terminal carboxy group concentration at 60 eq/ton or less, gas is not easily generated during the melting and molding of the resin material so that there is a tendency that the mechanical characteristics of the obtained molded article improve. Conversely, by setting the terminal carboxy group concentration at 3 eq/ton or more, there is a tendency that the heat resistance, residence heat stability, and hue of the obtained molded article improve, which is preferred.

The terminal carboxy group concentration of the polyethylene terephthalate resin is a value obtained by dissolving 0.5 g of the polyethylene terephthalate resin in 25 mL of benzyl alcohol and titrating with a 0.01 mol/L sodium hydroxide solution in benzyl alcohol.

### <<Polycarbonate Resin>>

For the polycarbonate resin used in this embodiment, a known polycarbonate resin can be used. A polycarbonate resin is usually a thermoplastic polymer or copolymer that may be branched, obtained by reacting a dihydroxy compound or a dihydroxy compound and a small amount of a polyhydroxy compound with phosgene or a carbonic acid diester. The method for producing the polycarbonate resin is not particularly limited, and one produced by a conventionally known phosgene method (interfacial polymerization method) or melting method (transesterification method) can be used; however, a polycarbonate resin produced by a melt polymerization method is preferred in terms of laser transmission properties and laser weldability.

As the dihydroxy compound as a starting material, an aromatic dihydroxy compound is preferred, and examples thereof include 2,2-bis(4-hydroxyphenyl)propane (that is, bisphenol A), tetramethyl bisphenol A, bis(4-hydroxyphenyl)-p-diisopropylbenzene, hydroquinone, resorcinol, and 4,4-dihydroxydiphenyl, preferably bisphenol A. A compound obtained by bonding one or more tetraalkylphosphonium sulfonates to the aromatic dihydroxy compound can also be used.

Among those described above, an aromatic polycarbonate resin derived from 2,2-bis(4-hydroxyphenyl)propane, or an aromatic polycarbonate copolymer derived from 2,2-bis(4-hydroxyphenyl)propane and another aromatic dihydroxy compound is preferred as the polycarbonate resin. The polycarbonate resin may be a copolymer such as a copolymer with a polymer or an oligomer having a siloxane structure. Two or more types of the above-described polycarbonate resins may be mixed and used.

The viscosity average molecular weight of the polycarbonate resin is preferably 5,000 to 30,000, more preferably 10,000 to 28,000, and further preferably 14,000 to 24,000. By using one having a viscosity average molecular weight of 5,000 or more, there is a tendency that the mechanical strength of the obtained molded article improves more. By using one having a viscosity average molecular weight of 30,000 or less, there is a tendency that the fluidity of the resin composition improves to improve the moldability and the laser weldability more.

The viscosity average molecular weight of the polycarbonate resin is viscosity average molecular weight [Mv] converted from solution viscosity measured at a temperature of 25°C using methylene chloride as a solvent.

### <<Aromatic Vinyl-Based Resin>>

For the aromatic vinyl-based resin used in this embodiment, a styrene-based resin is preferred.

The styrene-based resin used in this embodiment is a polymer including as the main component a compound having a styrene skeleton. Including as the main component a compound having a styrene skeleton means that 50% by mass or more of the starting material monomer is a compound having a styrene skeleton. Preferably 60% by mass or more, more preferably 70% by mass or more, of the starting material monomer is a compound having a styrene skeleton, and 80% by mass or more, 90% by mass or more, or 95% by mass or more of the starting material monomer may be a compound having a styrene skeleton.

Examples of the compound having a styrene skeleton include styrene, α-methylstyrene, para-methylstyrene, vinyltoluene, and vinylxylene, and styrene is preferred. As the compound having a styrene skeleton, polystyrene (PS) is typical.

As the styrene-based resin, a copolymer obtained by copolymerizing another monomer with a compound having a styrene skeleton can also be used. Typical examples include acrylonitrile-styrene copolymers (AS resins) obtained by copolymerizing styrene and acrylonitrile, and maleic anhydride-styrene copolymers (maleic anhydride-modified polystyrene resins) obtained by copolymerizing styrene and maleic anhydride.

As the styrene-based resin, a rubber-containing styrene resin obtained by copolymerizing or blending a rubber component can also be preferably used. Examples of the rubber component include conjugated diene-based hydrocarbons such as butadiene, isoprene, and 1,3-pentadiene, and in this embodiment, a butadiene-based rubber (butadiene rubber-containing polystyrene resin) is preferably used.

When the rubber component is copolymerized or blended, the amount of the rubber component is usually 1% by mass or more and less than 50% by mass, preferably 3 to 40% by mass, more preferably 5 to 30% by mass, and further preferably 5 to 20% by mass in all segments of the styrene-based resin.

As the rubber component-containing styrene-based resin, rubber-containing polystyrene is preferred, butadiene rubber-containing polystyrene is more preferred, and in terms of toughness, high impact polystyrene (HIPS) is particularly preferred.

As the styrene-based resin, polystyrene, acrylonitrile-styrene copolymers (AS resins), butadiene rubber-containing polystyrene, and maleic anhydride-modified polystyrene are preferred, and especially polystyrene and high impact polystyrene (HIPS) are preferred.

The aromatic vinyl-based resin preferably has a weight average molecular weight of 50000 to 500000, especially preferably 100000 to 400000, and particularly preferably 150000 to 300000 as measured by GPC. By setting the weight average molecular weight at 50000 or more, the bleedout of the molded article can be more effectively suppressed, and decomposition gas is not easily generated during molding so that there is a tendency that the welding strength increases. By setting the weight average molecular weight at 500000 or less, there is a tendency that the fluidity of the resin composition improves to improve the laser welding strength more.

In this embodiment, the resin composition preferably includes 10 to 90% by mass of the thermoplastic resin. The content of the thermoplastic resin is preferably 20% by mass or more, more preferably 30% by mass or more, and may be 40% by mass or more, further 50% by mass or more, in the resin composition. The content of the thermoplastic resin in the resin composition is preferably 85% by mass or less and may be 80% by mass or less, 75% by mass or less, or 72% by mass or less.

The resin composition may include only one thermoplastic resin or two or more types of thermoplastic resins. When the resin composition includes two or more types of thermoplastic resins, the total amount is preferably in the above range.

### <Bismuth Compound>

The resin composition of this embodiment includes 0.002 to 10.000 parts by mass of a bismuth compound per 100 parts by mass of the thermoplastic resin. When the resin composition of this embodiment includes a bismuth compound, a resin composition capable of being laser-marked and also capable of being laser-welded is obtained. The bismuth compound serves a function as a light transmittance decrease inhibitor for the resin composition for laser marking and for laser welding including a thermoplastic resin and two or more types of non-black organic pigments.

Examples of the bismuth compound include bismuth oxide, bismuth subgallate, bismuthinite, bismuth chloride oxide, bismuth subnitrate, bismuth subsalicylate, bismuth carbonate oxide, bismuth sodium titanate, and mixtures of two or more types of thereof. Especially bismuth oxide is preferred in terms of stability. Bismuth oxide is usually represented by Bi₂O₃.

In the bismuth compound, the specific surface area is preferably a specific surface area of 10 to 35 m²/g.

The average particle diameter of the bismuth compound is preferably 500 nm to 5 µm, more preferably 500 nm to 2 µm. A bismuth compound is usually aggregates of primary particles, and the number average particle of the aggregates is preferably in the range. By making the average particle diameter of the bismuth compound a particle diameter in the range, the laser transmittance can be more increased.

It is presumed that the bismuth compound has low metal specific heat and therefore easily absorbs heat to increase the laser marking properties.

The content of the bismuth compound of the resin composition of this embodiment is 0.002 parts by mass or more, preferably 0.010 parts by mass or more, further preferably 0.100 parts by mass or more, still more preferably 0.150 parts by mass or more, and even more preferably 0.200 parts by mass or more per 100 parts by mass of the thermoplastic resin. By setting the content of the bismuth compound at the lower limit value or more, there is a tendency that the laser marking properties improve more. The content of the bismuth compound is 10.000 parts by mass or less, preferably 6.000 parts by mass or less, further preferably 2.000 parts by mass or less, still more preferably 1.500 parts by mass or less, and even more preferably 1.000 part by mass or less and may be 0.8 parts by mass or less or 0.5 parts by mass or less per 100 parts by mass of the thermoplastic resin. By setting the content of the bismuth compound at the upper limit value or less, there is a tendency that the laser transmittance of the obtained molded article improves more.

The resin composition of this embodiment may or may not include a laser-absorbing agent (particularly a laser-absorbing agent that is an inorganic compound) other than a bismuth compound. When the resin composition of this embodiment is used as a light-transmissive resin composition (for a laser-transmitting resin member), the resin composition of this embodiment preferably includes substantially no laser-absorbing agent other than a bismuth compound. The expression "include substantially no..." means that the content of another laser-absorbing agent is 10% by mass or less based on the content of the bismuth compound. The content of another laser-absorbing agent is preferably 5% by mass or less, more preferably 3% by mass or less, and may be 1% by mass or less. The content of another laser-absorbing agent is preferably less than 0.01% by mass based on the resin composition and further may be less than 0.005% by mass. Examples of the laser-absorbing agent other than a bismuth compound include mica, iron oxide, titanium oxide, antimony-doped tin, tin oxide, indium oxide, neodymium trioxide, and oxides of at least one metal selected from gadolinium and neodymium.

By the configuration in which the resin composition of this embodiment includes substantially no laser-absorbing agent other than a bismuth compound, the amount of transmittance decrease can be preferably 5% or less, particularly 3% or less, 1% or less, or 0.5% or less. The amount of transmittance decrease is measured according to the description in Examples.

### <Organic Pigments>

The resin composition of this embodiment includes two or more types of non-black organic pigments.

When the resin composition of this embodiment includes two or more types of non-black organic pigments, there is a tendency that the colors of a transmitting resin member formed from a light-transmissive resin composition and an absorbing resin member formed from a light-absorptive resin composition can be unified to improve the designability.

The organic pigments used in this embodiment are preferably organic pigments (light-transmissive pigments) that transmit a certain proportion or more of a laser, when the resin composition of this embodiment is used as a light-transmissive resin composition for laser welding.

The light-transmissive pigments include, for example, such pigments that give a transmittance of 20% or more in the following procedure: a polybutylene terephthalate resin (for example, NOVADURAN (R) 5008), 30% by mass of glass fibers (for example, trade name: T-127 manufactured by Nippon Electric Glass Co., Ltd.), and 0.2% by mass of pigments (pigments considered as light-transmissive pigments) are blended so that the total is 100% by mass, and the light transmittance is measured by a measurement method (the measurement of the transmittance on the side opposite to the gate) described in Examples described later. By blending the light-transmissive pigments in this embodiment, the transmittance at a wavelength of 1064 nm can be 20% or more when the resin composition of this embodiment is molded to a thickness of 1.5 mm, for example.

The organic pigments used in this embodiment can be appropriately selected according to their use, and their colors are not particularly limited either. The organic pigments used in this embodiment are preferably a mixture of 2 to 10 organic pigments and preferably a mixture of 2 to 5 organic pigments. The organic pigments used in this embodiment are preferably chromatic pigments. Particularly, the organic pigments in this embodiment are preferably a black pigment mixture. The black pigment mixture means a pigment mixture including two or more types of chromatic organic pigments such as red, blue, and green organic pigments combined to exhibit a black color.

In this embodiment, a mixture of two or more types of non-black organic pigments has an absorbance at a wavelength of 1064 nm of preferably 1.0 or less. When the balance between laser transmittance and the degree of blackness is taken into account, most non-black organic pigments satisfy the requirement.

More preferably, the mixture of two or more types of non-black organic pigments used in this embodiment has an absorbance at a wavelength of 1064 nm of 0.8 or less, an absorbance at a wavelength of 1064 nm of 0.6 or less, and an absorbance at a wavelength of 1064 nm of 0.01 or more.

A first example of a black pigment composition includes a green organic pigment and a red organic pigment. A second example of the black pigment composition includes a red organic pigment, a blue organic pigment, and a yellow organic pigment.

Specific examples of the organic pigments are preferably organic pigments such as azo, quinacridone-based, perylene-based, and phthalocyanine-based organic pigments. The color tones include yellow, orange, red, purple, blue, and green, and these can be blended in combination to color the resin with the desired color tone. Specifically, specific examples of the azo pigments include PV Fast Yellow HG (manufactured by Clariant, Pigment Yellow 180), PV Fast Yellow H3R (manufactured by Clariant, Pigment Yellow 181), Cromophtal Orange K2960 (manufactured by BASF, Pigment Orange 64), Cromophtal Red K3890FP (manufactured by BASF, Pigment Red 144), Cromophtal Scarlet K3540 (manufactured by BASF, Pigment Red 166), Cromophtal Red K3900 (manufactured by BASF, Pigment Red 214), and Cromophtal Red K4035 (manufactured by BASF, Pigment Red 221).

Specific examples of the quinacridone-based pigments include PV Fast Red E4G (manufactured by Clariant, Pigment Violet 19), and PV Fast Pink E-01 (manufactured by Clariant, Pigment Red 122).

Specific examples of the perylene-based pigments include Paliogen Red K3580 (manufactured by BASF, Pigment Red 149) and Paliogen Red K3911 (manufactured by BASF, Pigment Red 178).

Specific examples of the phthalocyanine-based pigments include LIONOL Blue CB7801 (manufactured by TOYOCOLOR CO., LTD., Pigment Blue 15:1), LIONOL Blue FG7351 (manufactured by TOYOCOLOR CO., LTD., Pigment Blue 15:3), LIONOL Green Y-102 (manufactured by TOYOCOLOR CO., LTD., Pigment Green 7), LIONOL Green 6Y-501 (manufactured by TOYOCOLOR CO., LTD., Pigment Green 36), and SUMITONE CYANINE BLUE GH (manufactured by SUMIKA COLOR CO., LTD., Pigment Blue 15:3).
One of the coloring matters may be used alone, or two or more types of the coloring matters may be used.

Especially, a combination of PV Fast Yellow HG, Paliogen Red K3911, and SUMITONE CYANINE BLUE GH is more preferred in view of black toning.

The content (total amount) of the organic pigments in the resin composition of this embodiment is 0.1 to 5.0 parts by mass per 100 parts by mass of the thermoplastic resin. By setting the content (total amount) of the organic pigments at the lower limit value or more, the molded article is colored to increase the designability. By setting the content (total amount) of the organic pigments at the upper limit value or less, a decrease in the transmittance of the obtained molded article can be effectively suppressed. The lower limit value of the content is preferably 0.2 parts by mass or more. The upper limit value of the content is preferably 3.0 parts by mass or less, more preferably 2.0 parts by mass or less, further preferably 1.0 part by mass or less, still more preferably 0.8 parts by mass or less, and even more preferably 0.7 parts by mass or less.

In this embodiment, particularly the following blending ratios are preferred for the organic coloring matter.
(1) A resin composition including 0.1 to 5.0 parts by mass of pigments per 100 parts by mass of a thermoplastic resin, the resin composition including substantially no inorganic pigment other than a bismuth compound. The expression "including substantially no inorganic pigment other than a bismuth compound" means that the content of an inorganic pigment other than a bismuth compound is, for example, less than 10% by mass based on the content of the bismuth compound. The content of the inorganic pigment other than a bismuth compound is preferably 5% by mass or less, more preferably 3% by mass or less, and further preferably 1% by mass or less.
(2) A resin composition including 0.1 to 5.0 parts by mass of pigments per 100 parts by mass of a thermoplastic resin, the resin composition further including a dye such as an organic dye, wherein the mass ratio between organic pigments and the dye is preferably 1:10 to 10:1.

In this embodiment, even if a bismuth compound is blended, the resin composition does not blacken and exhibits a white color, and therefore two or more types of organic pigments can be blended to produce molded articles having various colors.

The mass ratio between the content mass of the two or more types of non-black organic pigments and the content of the bismuth compound in the resin composition of this embodiment is preferably 1:0.05 to 10, more preferably 1:0.1 to 5, further preferably 1:0.1 to 3, still more preferably 1:0.1 to 2, and even more preferably 1:0.1 to 1.5.

### <Organic Dye>

The resin composition of this embodiment may include an organic dye.

The organic dye used in this embodiment can be appropriately selected according to its use, and its color is not particularly limited either. The organic dye used in this embodiment may be one organic dye or a mixture of two or more types of organic dyes. Particularly, one is preferred that forms, together with the two or more types of organic pigments, a colorant mixture exhibiting a black color.

When the resin composition contains an organic dye, the content of the organic dye is preferably 10 to 90 parts by mass, more preferably 10 to 50 parts by mass, and further preferably 10 to 40 parts by mass per 100 parts by mass of the organic pigments.

In this embodiment, when the resin composition includes an organic dye, a mixture of the two or more types of organic pigments and the organic dye preferably has an absorbance at a wavelength of 1064 nm of 1.0 or less and an absorbance at a wavelength of 500 nm of 1.0 or more. Preferably, the mixture has an absorbance at a wavelength of 1064 nm of 0.08 or less and an absorbance at a wavelength of 500 nm of 1.20 or more.

Specific examples of the organic dye include nigrosine, naphthalocyanine, aniline black, phthalocyanine, porphyrin, perinone, perylene, quaterrylene, azo, azomethine, anthraquinone, pyrazolone, squaric acid derivatives, perylene, chromium complexes, immonium, imidazole (particularly benzimidazole), and cyanine. Azomethine, anthraquinone, and perinone are preferred, and among them, anthraquinone, perinone, perylene, imidazole (particularly benzimidazole), and cyanine are more preferred.

Examples of commercial products include e-BIND LTW-8731H and e-BIND LTW-8701H, which are organic dyes manufactured by ORIENT CHEMICAL INDUSTRIES CO., LTD., Plast Yellow 8000, Plast Red M 8315, Plast Red 8370, and Oil Green 5602, which are organic dyes manufactured by ARIMOTO CHEMICAL Co., Ltd., Macrolex Yellow 3G, Macrolex Red EG, and Macrolex Green 5B, which are organic dyes manufactured by LANXESS, KP Plast HK, KP Plast Red HG, KP Plast Red H2G, KP Plast Blue R, KP Plast Blue GR, and KP Plast Green G, which are manufactured by Kiwa Chemical Industry Co., Ltd., and the Lumogen series manufactured by BASF. The organic dyes described in Japanese Patent No. 4157300 and the organic dyes described in Japanese Patent No. 4040460 can also be used, and the contents of these are incorporated herein.

### <Aromatic Ring-Containing Compound>

The resin composition of this embodiment preferably includes an aromatic ring-containing compound including a benzene ring and/or a benzo condensed ring (hereinafter sometimes simply referred to as an "aromatic ring-containing compound"). The aromatic ring-containing compound has high laser-absorbing ability and therefore compensates for the decrease in transmittance due to the blending of the organic pigments to allow laser welding and laser marking. Further, by using the aromatic ring-containing compound, the heat resistance characteristics can also be improved.

Examples of the aromatic ring-containing compound include aromatic ring-containing compounds having a number average molecular weight of 8000 or less. The number average molecular weight of the aromatic ring-containing compound is preferably 5000 or less, further preferably 3000 or less, more preferably 2000 or less, and particularly preferably 1000 or less and may be 500 or less. The lower limit value is not particularly limited, but the number average molecular weight is preferably 100 or more, further preferably 300 or more, and particularly preferably 400 or more. By setting such a range, there is a tendency that the effect of this embodiment is more effectively exerted.

The aromatic ring-containing compound preferably includes a benzene ring and/or a benzo condensed ring in an amount of 15 to 75% by mass, more preferably 30% by mass or more, further preferably 35% by mass or more, and particularly preferably 50% by mass or more and more preferably 70% by mass or less, further preferably 65% by mass or less, and particularly preferably 60% by mass or less in terms of the molecular weight ratio. The molecular weight ratio is the proportion of the total molecular weight of the benzene ring and/or benzo condensed ring in the aromatic ring-containing compound to the molecular weight of the aromatic ring-containing compound.

The benzo condensed ring refers to a condensed ring including a benzene ring, and examples thereof include an anthracene ring and a phenanthrene ring. In this embodiment, the aromatic ring-containing compound is preferably a compound including a benzene ring in an amount of 15 to 75% by mass, more preferably 15 to 70% by mass, in terms of the molecular weight ratio.

The aromatic ring-containing compound is a compound including a reactive group (preferably an epoxy group). By using the aromatic ring-containing compound including a reactive group, there is a tendency that the welding strength in laser welding increases.

The aromatic ring-containing compound including a reactive group is preferably a compound that can chemically react with a carboxy group or a hydroxy group present at an end of the polybutylene terephthalate resin to cause a crosslinking reaction or chain length extension. The aromatic ring-containing compound including a reactive group specifically preferably includes one or more selected from the group consisting of epoxy compounds (compounds including an epoxy group), carbodiimide compounds, compounds including an oxazoline group (ring), compounds including an oxazine group (ring), compounds including a carboxy group, and compounds including an amide group, more preferably includes at least one selected from epoxy compounds and carbodiimide compounds, and further preferably includes an epoxy compound. Particularly, in this embodiment, 90% by mass or more, further 95% by mass or more, and particularly 99% by mass or more of the aromatic ring-containing compound is preferably an epoxy compound.

The epoxy compound is not particularly limited as long as it is a compound including an aromatic ring in a predetermined proportion and including one or more epoxy groups in one molecule. Known epoxy compounds can be widely used. When the resin composition of this embodiment includes the epoxy compound, there is a tendency that the range of laser irradiation conditions expands.

Specific examples of the aromatic ring-containing compound include bisphenol A type epoxy compounds (including bisphenol A diglycidyl ether), bisphenol F type epoxy compounds (including bisphenol F diglycidyl ether), biphenyl type epoxy compounds (including bis(glycidyloxy)biphenyl), resorcin type epoxy compounds (including resorcinol diglycidyl ether), novolac type epoxy compounds, glycidyl benzoate ester, diglycidyl terephthalate ester, and diglycidyl orthophthalate ester.

Especially, bisphenol A type epoxy compounds, novolac type epoxy compounds, bisphenol F type epoxy compounds, biphenyl type epoxy compounds, and the like are preferred, particularly orthocresol/novolac type epoxy compounds (polyglycidyl ether compounds of O-cresol-formaldehyde polycondensates) are more preferred, and novolac type epoxy compounds are further preferred.

Examples of commercial products include "Joncryl ADR4368C" (trade name: manufactured by BASF), "YDCN704" (trade name: manufactured by NIPPON STEEL & SUMIKIN CHEMICAL CO., LTD.), "EP-17" (trade name: manufactured by ADEKA Corporation), "CNE220" (trade name: manufactured by Chang Chun), and "JER1003" (trade name: manufactured by Mitsubishi Chemical Corporation).

When the aromatic ring-containing compound is an epoxy compound, its epoxy equivalent is preferably 100 g/eq or more, more preferably 150 g/eq or more. The epoxy equivalent is preferably 1500 g/eq or less, more preferably 900 g/eq or less, and further preferably 800 g/eq or less. The epoxy equivalent is a value obtained by dividing the molecular weight of the epoxy compound by the number of epoxy groups present in the epoxy compound.

By setting the epoxy equivalent at the lower limit value or more, there is a tendency that the welding strength and the hydrolysis resistance of the welded article increase more. By setting the epoxy equivalent at the upper limit value or less, there is a tendency that the resin composition has increased fluidity and can be thus easily molded.

When the resin composition of this embodiment includes the aromatic ring-containing compound, its content is preferably 0.1 parts by mass or more, further preferably 0.2 parts by mass or more, and more preferably 0.4 parts by mass or more and may be 1 part by mass or more per 100 parts by mass of the thermoplastic resin. By setting the content at the lower limit value or more, there is a tendency that the welding strength increases. In terms of the upper limit value, the content of the aromatic ring-containing compound is preferably 18 parts by mass or less, more preferably 15 parts by mass or less, and further preferably 10 parts by mass or less and further may be 5 parts by mass or less, 3 parts by mass or less, or 2 parts by mass or less per 100 parts by mass of the thermoplastic resin. By setting the content of the aromatic ring-containing compound at the upper limit value or less, there is a tendency that the fluidity increases more to improve the moldability.

The resin composition of this embodiment may include only one aromatic ring-containing compound or two or more types of aromatic ring-containing compounds. When the resin composition of this embodiment includes two or more types of aromatic ring-containing compounds, the total amount is preferably in the above range.

### <Inorganic Filler>

The resin composition of this embodiment preferably further includes an inorganic filler. When the resin composition of this embodiment includes an inorganic filler, particularly a fibrous inorganic filler, preferably glass fibers, there is a tendency that the mechanical strength and also the heat-resistant strength increases to improve the durability of the laser-welded article more.

The inorganic filler that can be contained and used in the resin composition of this embodiment has the effect of improving the mechanical properties of a resin composition obtained by blending the inorganic filler into a resin, and commonly used inorganic fillers for plastics can be used. Preferably fibrous inorganic fillers such as glass fibers, carbon fibers, basalt fibers, wollastonite, and potassium titanate fibers can be used. Granular or amorphous fillers such as calcium carbonate, titanium oxide, feldspar-based minerals, clay, organoclay, and glass beads; plate-like fillers such as talc; and scale-like inorganic fillers such as glass flakes, mica, and graphite can also be used. Especially, fibrous fillers, particularly glass fibers, are preferably used in terms of mechanical strength, rigidity, and heat resistance. Either glass fibers having a round cross-sectional shape or those having an irregular cross-sectional shape can be used.

For the inorganic filler, one surface-treated with a surface treatment agent such as a coupling agent is more preferably used. Glass fibers with a surface treatment agent adhered thereto are excellent in durability, moist heat resistance, hydrolysis resistance, and heat shock resistance and therefore preferred.

As the surface treatment agent, any conventionally known one can be used, and specific preferred examples include silane coupling agents such as aminosilane-based, epoxysilane-based, allylsilane-based, and vinylsilane-based silane coupling agents. Among these, aminosilane-based surface treatment agents are preferred, and specific preferred examples include γ-aminopropyltriethoxysilane, γ-aminopropyltrimethoxysilane, and γ- (2-aminoethyl)aminopropyltrimethoxysilane.

Preferred examples of other surface treatment agents include epoxy resin-based surface treatment agents such as a novolac type, and bisphenol A type epoxy resin-based surface treatment agents, and particularly treatment with a novolac type epoxy resin-based surface treatment agent is preferred.

The silane-based surface treatment agent or the epoxy resin-based surface treatment agent may be used alone, or a plurality of the silane-based surface treatment agents or a plurality of the epoxy resin-based surface treatment agents may be used. Both the silane-based surface treatment agent and the epoxy resin-based surface treatment agent are also preferably used in combination. The glass fibers in this embodiment mean a fibrous glass material, and more specifically glass fibers having a chopped shape obtained by bundling 1,000 to 10,000 glass fibers and cutting the bundled glass fibers to a predetermined length is preferred.

For the glass fibers in this embodiment, those having a number average fiber length of 0.5 to 10 mm are preferred, and those having a number average fiber length of 1 to 5 mm are more preferred. By using glass fibers having such a number average fiber length, the mechanical strength can be more improved. For the number average fiber length, glass fibers whose fiber lengths are to be measured are randomly extracted in an image obtained by observation under an optical microscope, their long sides are measured, and the number average fiber length is calculated from the found values. The observation magnification is 20X and the number of glass fibers to be measured is 1,000 or more. The number average fiber length generally corresponds to the cut length.

The cross sections of the glass fibers may have any shape such as a circle, an ellipse, an oval, a rectangle, a shape of a rectangle with semicircles joined to both short sides thereof, or an eyebrow shape, but a circle is preferred. The circle here is intended to include a circle in a geometric sense and also those usually referred to as circles in the technical field of this embodiment. By using glass fibers having a circular cross section, there is a tendency that the decrease rate of laser transmittance can be decreased, though essentially the laser transmittance decreases by adding glass fibers. In terms of the lower limit, the number average fiber diameter of the glass fibers is preferably 4.0 µm or more, more preferably 4.5 µm or more, and further preferably 5.0 µm or more. In terms of the upper limit, the number average fiber diameter of the glass fibers is preferably 15.0 µm or less, more preferably 14.0 µm or less. By using glass fibers having a number average fiber diameter in such a range, there is a tendency that a molded article better in mechanical strength is obtained. The number average fiber diameter of the glass fibers is calculated from found values obtained by randomly extracting glass fibers whose fiber diameters are to be measured, in an image obtained by observation under an electron microscope, and measuring fiber diameters near the central portions. The observation magnification is 1,000X and the number of glass fibers to be measured is 1,000 or more. The number average fiber diameter of glass fibers having a cross section other than a circular cross section is the number average fiber diameter when the shape of the cross section is converted into a circle having the same area as the area of the cross section.

For the glass fibers, fibers obtained by melt-spinning glass such as generally supplied E glass (Electrical glass), C glass (Chemical glass), A glass (Alkali glass), S glass (High strength glass), D glass, R glass, and alkali-resistant glass are used. Any glass that can be formed into glass fibers can be used, and the glass is not particularly limited. In this embodiment, E glass is preferably included.

The glass fibers used in this embodiment is preferably surface-treated with a surface treatment agent such as a silane coupling agent, for example, γ-methacryloxypropyltrimethoxysilane, γ-glycidoxypropyltrimethoxysilane, or γ-aminopropyltriethoxysilane. The amount of the surface treatment agent adhering is preferably 0.01 to 1% by mass of the glass fibers. Those surface-treated with a lubricant such as a fatty acid amide compound or a silicone oil, an antistatic agent such as a quaternary ammonium salt, a resin having film-forming ability such as an epoxy resin or a urethane resin, or a mixture of a resin having film-forming ability and a heat stabilizer, a flame retardant, and the like can also be used as needed.

The glass fibers are available as a commercial product. Examples of the commercial product include T-286H, T-756H, T-127, and T-289H manufactured by Nippon Electric Glass Co., Ltd., DEFT2A manufactured by Owens Corning, HP3540 manufactured by PPG, and CSG3PA820 manufactured by Nitto Boseki Co., Ltd.

The content of the inorganic filler (preferably the glass fibers) in the resin composition of this embodiment is preferably 10 parts by mass or more, more preferably 15 parts by mass or more, further preferably 20 parts by mass or more, still more preferably 25 parts by mass or more, and even more preferably 30 parts by mass or more per 100 parts by mass of the thermoplastic resin. By setting the content of the inorganic filler (preferably the glass fibers) at the lower limit value or more, there is a tendency that the strength of the base material of the laser-welded article increases, and that the heat resistance of the laser-welded article increases. In terms of the upper limit value, the content of the inorganic filler is preferably 70 parts by mass or less, more preferably 60 parts by mass or less, and further preferably 50 parts by mass or less per 100 parts by mass of the thermoplastic resins. By setting the content of the inorganic filler at the upper limit value or less, there is a tendency that the welding strength of the interface portion increases.

The content of the inorganic filler (preferably the glass fibers) in the resin composition of this embodiment is preferably 20% by mass or more, more preferably 25% by mass or more, of the resin composition. The content of the inorganic filler (preferably the glass fibers) is preferably 40% by mass or less, more preferably 35% by mass or less.

The resin composition of this embodiment may include only one inorganic filler (preferably glass fibers) or two or more types of inorganic fillers (preferably glass fibers). When the resin composition of this embodiment includes two or more types of inorganic fillers (preferably glass fibers), the total amount is preferably in the above ranges.

### <Stabilizer>

The resin composition of this embodiment preferably contains a stabilizer, and as the stabilizer, a phosphorus-based stabilizer and a phenol-based stabilizer are preferred.

As the phosphorus-based stabilizer, any known one can be used. Specific examples include oxoacids of phosphorus such as phosphoric acid, phosphonic acid, phosphorous acid, phosphinic acid, and polyphosphoric acid; metal acid pyrophosphates such as sodium acid pyrophosphate, potassium acid pyrophosphate, and calcium acid pyrophosphate; phosphates of group 1 or group 2 metals such as potassium phosphate, sodium phosphate, cesium phosphate, and zinc phosphate; organophosphate compounds, organophosphite compounds, and organophosphonite compounds, and organophosphite compounds are particularly preferred.

Examples of the phenol-based stabilizer include hindered phenol-based antioxidants.

For the details of these, the description in the paragraphs 0105 to 0111 of International Publication No. WO 2020/013127 can be referred to, and the contents of this are incorporated herein.

The content of the stabilizer is usually 0.001 parts by mass or more, preferably 0.01 parts by mass or more, and usually 2 parts by mass or less, preferably 1.0 part by mass or less, per 100 parts by mass of the thermoplastic resin. By setting the content of the stabilizer at the lower limit value of the range or more, the effect as the stabilizer can be more effectively obtained. By setting the content of the stabilizer at the upper limit value of the range or less, the effect does not peak, and such content is thus economical.

The resin composition of this embodiment may include only one stabilizer or two or more types of stabilizers. When the resin composition of this embodiment includes two or more types of stabilizers, the total amount is preferably in the above range.

### <Release Agent>

The resin composition of this embodiment preferably contains a release agent (lubricant). Examples of the release agent include aliphatic carboxylic acids, esters of aliphatic carboxylic acids and alcohols, aliphatic hydrocarbon compounds having a number average molecular weight of 200 to 15000, waxes, and polysiloxane-based silicone oils.

For the details of these, the description in the paragraphs 0112 to 0121 of International Publication No. WO 2020/013127 can be referred to, and the contents of this are incorporated herein.

The content of the release agent is usually 0.001 parts by mass or more, preferably 0.01 parts by mass or more, and usually 2 parts by mass or less, preferably 1 part by mass or less, per 100 parts by mass of the thermoplastic resin. By setting the content of the release agent at the lower limit value of the range or more, the effect of releasability is easily sufficiently obtained. By setting the content of the release agent at the upper limit value of the range or less, sufficient hydrolysis resistance is obtained, and mold contamination during injection molding, and the like do not occur easily.

The resin composition of this embodiment may include only one release agent or two or more types of release agents. When the resin composition of this embodiment includes two or more types of release agents, the total amount is preferably in the above range.

### <Other Components>

The resin composition of this embodiment may contain other components as needed, in addition to those described above, as long as the desired various physical properties are not significantly impaired. Examples of other components include various resin additives. One of other components may be contained, or two or more types of other components may be contained in any combination and ratio.

Specific examples include a flame retardant, an ultraviolet-absorbing agent, an antistatic agent, an antifogging agent, an antiblocking agent, a fluidity-improving agent, a plasticizer, a dispersing agent, an antimicrobial agent, and a laser-marking agent other than a bismuth compound.

In this embodiment, the total of the thermoplastic resin, the bismuth compound, the two or more types of non-black organic pigments, and the components (for example, the inorganic filler, the stabilizer, the release agent, and the organic dye) blended as needed preferably accounts for 90% by mass or more, preferably 95% by mass or more, and further preferably 99% by mass or more of the thermoplastic resin component included in this embodiment. The upper limit is 100% by mass.

### <Physical Properties of Resin Composition>

When the resin composition of this embodiment is used as a light-transmissive resin composition, it is preferably excellent in transmittance. Specifically, the light-transmissive resin composition of this embodiment has a transmittance (wavelength: 1064 nm) of preferably more than 10.0% or more, more preferably 15.0% or more, when molded to a thickness of 1.5 mm. The upper limit value is not particularly limited, but is practically 90% or less, and even if the transmittance (wavelength: 1064 nm) is 50% or less, the performance requirement is sufficiently satisfied. The light-transmissive resin composition of this embodiment has a transmittance at wavelengths of 800 nm and 1900 nm of preferably 10% or less, more preferably 5% or less, when molded to a thickness of 1.5 mm.

When the resin composition of this embodiment is used for a black molded article, it has an L value in accordance with ISO 7724/1 of preferably 45 or less, further preferably 40 or less, and particularly preferably 35 or less when molded to a thickness of 1.5 mm. When the resin composition of this embodiment is used for a white molded article, it has an L value of preferably 75 or more, further preferably 80 or more, and particularly preferably 85 or more.

### <Method for Producing Resin Composition>

The resin composition of this embodiment can be produced by an ordinary method for the preparation of a resin composition. Usually, components and a variety of additives added as desired are put together, well mixed, and then melted and kneaded by a single-screw or twin-screw extruder. It is also possible to supply components to an extruder using a feeder, without previously mixing them or after previously mixing only some of them, and melt and knead them to prepare the resin composition of this embodiment. It is possible to melt and knead some components such as pigments with a thermoplastic resin to prepare a masterbatch, then blend the remaining components thereinto, and melt and knead the blend.

When an inorganic filler is used, it is also preferably supplied from a side feeder in the middle of the cylinder of an extruder.

The heating temperature in melting and kneading can be usually appropriately selected from the range of 220 to 300°C. When the temperature is too high, decomposition gas is easily generated, which may cause opacification. Therefore, it is desirable to select a screw configuration taking shear heat generation and the like into account. In view of suppressing decomposition during kneading and during molding in a subsequent step, the use of an antioxidant and a heat stabilizer is desired.

### <Molded Article and Method for Producing Molded Article>

The resin composition in this embodiment is molded according to a known method.

The method for producing a molded article is not particularly limited, and a molding method generally adopted for a resin composition can be arbitrarily adopted. Examples thereof include an injection molding method, an ultrahigh speed injection molding method, an injection compression molding method, a two-color molding method, a hollow molding method such as gas assist, a molding method involving use of a heat-insulating mold, a molding method involving use of a rapidly heated mold, foaming (also including a supercritical fluid), insert molding, an IMC (in-mold coating) molding method, an extrusion method, a sheet molding method, a thermoforming method, a rotational molding method, a laminate molding method, a press molding method, and a blow molding method, and especially injection molding is preferred.

For the details of injection molding, the description in the paragraphs 0113 to 0116 of Japanese Patent No. 6183822 can be referred to, and the contents of these are incorporated herein.

The molded article of this embodiment is formed from the resin composition of this embodiment. The molded article of this embodiment may be used as a laser-transmitting resin member or a laser-absorbing resin member in laser welding, but is preferably used as a laser-transmitting resin member. Further, a resin member (particularly a laser-transmitting resin member) formed from the resin composition of this embodiment is capable of being laser-marked.

### <Method for Producing Laser-Welded Article>

Next, a laser welding method will be described. In this embodiment, a laser-welded article can be provided by laser-welding together a transmitting resin member and an absorbing resin member. By performing laser welding, the transmitting resin member and the absorbing resin member can be strongly welded together without using an adhesive.

The transmitting resin member and the absorbing resin member may be laser-welded by any known laser welding method but is suitable for galvano-scanning laser welding. The galvano-scanning laser welding is also referred to as Quasi-simultaneous welding and is a method involving scanning laser light by a built-in galvano-mirror. By using the galvano-scanning laser welding, the entire welding portion is substantially simultaneously heated, and therefore there is a tendency that the residual stress of the obtained laser-welded article decreases.

The laser light source used for laser welding can be selected according to the light absorption wavelength of the light-absorptive coloring matter, and a laser having a wavelength in the range of 800 to 1100 nm is preferred, and a laser in the range of 940 to 1100 nm is more preferred. Examples of the type of the laser light to be radiated include solid-state lasers, fiber lasers, semiconductor lasers, gas lasers, and liquid lasers. For example, YAG (yttrium-aluminum-garnet crystal) lasers (wavelength 1064 nm, 1070 nm), or LD (laser diode) lasers (wavelength 808 nm, 840 nm, 940 nm, 980 nm) can be preferably used. Especially, laser light having wavelengths of 940 nm, 980 nm, 1064 nm, and 1070 nm is preferred, and laser light having wavelengths of 1064 nm is more preferred.

The laser focus diameter is preferably a diameter of 0.1 mm or more, more preferably a diameter of 0.2 mm or more, and still more preferably a diameter of 0.5 mm or more. By setting the laser focus diameter at the upper limit value or less, the welding strength of the laser welding portion can be more increased. The laser irradiation diameter is preferably a diameter of 30 mm or less, more preferably 10 mm or less, and still more preferably 3.0 mm or less. By setting at the lower limit value or more, the welding width can be more effectively controlled.

The laser light focus diameter can be selected according to the width and height of the welding surface.

Laser light may be focused or defocused on the joining surface and is preferably appropriately selected according to the required welded article.

The laser power is preferably 1 W or more, and more preferably 10 W or more. By setting the laser power at the lower limit value or more, more sufficient welding strength can be obtained even if the welding time is short. The laser power is preferably 1000 W or less, more preferably 500 W or less, further preferably 400 W or less, and still more preferably 300 W or less. By setting the laser power at the upper limit value or less, the cost for the laser welding facility can be effectively reduced.

The laser irradiation speed is preferably 10 mm/s or more, more preferably 30 mm/s or more, further preferably 50 mm/s or more, and still more preferably 500 mm/s or more. By setting the laser irradiation speed at the lower limit value or more, the residual stress of the laser-welded article can be more effectively reduced. The laser irradiation speed is preferably 20000 mm/s or less, more preferably 10000 mm/s or less, further preferably 5000 mm/s or less, and even more preferably 3000 mm/s or less. By setting the laser irradiation speed at the upper limit value or less, more sufficient welding strength can be obtained for the welded article. Regarding the laser scanning method, the power of the laser, the line to be welded, the scanning speed, and/or the scanning method are preferably adjusted according to the shape of the joining surface, in view of welding efficiency, welding strength, welding appearance, and apparatus load.

In the laser welding, more specifically, when the transmitting resin member and the absorbing resin member are welded together, the parts to be welded of both are usually brought into contact with each other. At this time, it is desirable to bring both parts to be welded into surface contact with each other, and the welding parts may have flat surfaces, curved surfaces, or a combination of a flat surface and a curved surface. When the superimposed state is maintained, a transparent plate material such as a glass plate, a quartz plate, or an acrylic plate may be put on the transmitting resin member, that is, on the laser irradiation side, to thereby apply pressure. Particularly, putting a glass plate or a quartz plate is suitable for promoting the dissipation of heat generated during laser welding and obtaining a good appearance. Alternatively, pressure may be applied by put metal plates so as to surround the periphery of the portion to be welded of the transmitting resin member.

Then, laser light is radiated from the transmitting resin member side. At this time, laser light may be condensed at the interface between both using a lens as needed. The condensed beam is transmitted through the transmitting resin member and absorbed in the vicinity of the surface of the absorbing resin member to cause heat generation and melting. Then, the heat is also transferred to the transmitting resin member by heat transfer to cause melting to form a molten pool at the interface between both. After cooling, both are joined together.

In this manner, the laser-welded article of the transmitting resin member and the absorbing resin member has high welding strength. The laser-welded article in this embodiment is intended to encompass completed articles and components as well as members as parts of these.

### <Kit and Laser-Marked Laser-Welded Article>

The kit of this embodiment has the resin composition of this embodiment and a light-absorptive resin composition including a thermoplastic resin and light-absorptive coloring matter. In the kit, the resin composition of this embodiment plays a role as a light-transmissive resin composition. Such a kit is excellent in laser weldability and is preferably used as a kit for the production of a molded article obtained by laser welding (laser-welded article). Further, laser marking can also be performed.

Thus, the resin composition of this embodiment included in the kit plays a role as a light-transmissive resin composition, and a molded article formed from such a light-transmissive resin composition serves as a transmitting resin member for laser light in laser welding. On the other hand, a molded article formed from a light-absorptive resin composition serves as an absorbing resin member for laser light in laser welding. The kit of this embodiment may be a kit having a laser-transmitting resin member formed from the resin composition of this embodiment, and a light-absorptive resin composition including a thermoplastic resin and light-absorptive coloring matter.

The laser-welded article of this embodiment can be produced by a production method including irradiating a laser-transmitting resin member formed from the resin composition of this embodiment (or the laser-transmitting resin member of this embodiment) with a laser to laser-mark the laser-transmitting resin member, and laser-welding together the laser-transmitting resin member and a laser-absorbing resin member formed from a light-absorptive resin composition including a thermoplastic resin and light-absorptive coloring matter. When the laser-welded article of this embodiment is produced, either laser welding or laser marking may be performed first, or they may be simultaneously performed. Usually, the transmitting resin member is capable of being laser-marked. When the resin composition of this embodiment is a light-absorptive resin composition including light-absorptive coloring matter, the absorbing resin member may be capable of being laser-marked. Further, the resin composition of this embodiment may be used for each of the transmitting resin member and the absorbing resin member to allow each of the transmitting resin member and the absorbing resin member to have a configuration in which it is capable of being laser-marked.

In the kit, preferably 70% by mass or more, more preferably 80% by mass or more, and still more preferably 95 to 100% by mass of the components in the resin composition of this embodiment excluding the coloring matter and the inorganic filler, is the same as the components in the light-absorptive resin composition excluding the coloring matter and the inorganic filler.

The molded article obtained by laser welding in this embodiment has good mechanical strength, has high welding strength, and also suffers little damage to the resin due to laser irradiation, and therefore can be applied to a variety of uses, for example, various storage containers, components of electrical and electronic equipment, components of office automation (OA) equipment, components of household electrical equipment, components of machine mechanism, components of vehicle mechanism, and the like. Particularly, the molded article can be suitably used for food containers, drug containers, containers for oil and fat product, hollow components of vehicle (various tanks, intake manifold components, and camera housings), electrical components of vehicle (various control units, ignition coil components, and the like), in-vehicle electronic components and sensor components (housings for millimeter wave radars, LiDARs, ECU cases, sonar sensors, and the like), electronically controlled throttle bodies, motor components, various sensor components, connector components, switch components, breaker components, relay components, coil components, transformer components, lamp components, and the like. Particularly, the resin composition and kit of this embodiment are suitable for in-vehicle camera components and in-vehicle camera modules including in-vehicle camera components, millimeter wave radar modules, sensor modules, and electric parking brake (EPB) components.

### [Examples]

The present invention will be more specifically described below by giving Examples. The materials, amounts used, proportions, details of treatment, treatment procedures, and others shown in the following Examples can be appropriately changed without departing from the spirit of the present invention. Therefore, the scope of the present invention is not limited to the specific examples shown below.

If the measurement equipment and the like used in the Examples are not available because of, for example, discontinued models, measurement can be performed using another equipment having equivalent performance.

### 1. Materials

The materials shown in the following Table 1 and Table 2 were used.

**[Table 1]**

| Component | Abbreviation | |
|---|---|---|
| Polybutylene terephthalate resin | PBT | Polybutylene terephthalate resin |
| | | Manufactured by Mitsubishi Engineering-Plastics Corporation |
| | | Trade name: NOVADURAN (R) 5008 |
| | | Intrinsic viscosity: 0.85dL/g |
| | | Amount of terminal carboxy groups: 20eq/ton, Tg: 50°C |
| | IPA-PBT | Polybutylene terephthalate resin |
| | | Manufactured by Mitsubishi Engineering-Plastics Corporation |
| | | Trade name: NOVADURAN (R) 5605 |
| | | Intrinsic viscosity: 0.84dL/g |
| | | Amount of terminal carboxy groups: 23eq/ton, Tg: 50°C |
| Polycarbonate resin | PC | Manufactured by Mitsubishi Engineering-Plastics Corporation |
| | | Trade name: lupilon (R) H4000 |
| | | Viscosity average molecular weight: 16,000, Tg: 150°C |
| Glass fibers | GF | Manufactured by Nippon Electric Glass Co., Ltd., Trade name: T-127 |
| | | Number average fiber diameter: 13µm, Number average fiber length: 3mm, Cross sections are circular. |
| Aromatic ring-containing compound | EP1 | Bisphenol A type epoxy compound, Manufactured by ADEKA Corporation, EP-17 |
| | | Molecular weight 370, Epoxy equivalent: 185(g/eq), Molecular weight ratio of benzene ring and/or benzo condensed ring: (41%) |
| | EP2 | Orthocresol/novolac type epoxy compound (polyglycidyl ether compound of O-cresol-formaldehyde polycondensate) |
| | | Manufactured by Chang Chun, Trade name: CNE220 |
| | | Epoxy equivalent: 207(g/eq), Molecular weight 580, Molecular weight ratio of benzene ring and/or benzo condensed ring: (39%) |

**[Table 2]**

| Component | Abbreviation | |
|---|---|---|
| Phenol-based stabilizer | | Pentaerythritol tetrakis[3-(3,5-di-tert-butyl-4-hydroxyphenyl) propionate] |
| | | Manufactured by ADEKA Corporation, Trade name: ADK STAB AO-60 |
| Phosphorus-based stabilizer | | Mixture of O=P(OH)ₙ(OC₁₃H₃₇)₃₋ₙ with n = 1 and that with n = 2 |
| | | Manufactured by ADEKA Corporation, Trade name: ADK STAB AX-71 |
| Release agent | R1 | Manufactured by Clariant Licowax E |
| Inorganic pigment | I-PIG1 | Bismuth trioxide (manufactured by Tokan Material Technology Co., Ltd., trade name:42-920A) |
| | I-PIG2 | Mica + iron oxide(manufactured by Merck Performance Materials, trade name:lriotec 8835) |
| | I-PIG3 | Mica + iron oxide + titanium oxide (manufactured by Merck Performance Materials, trade name:lriotec 8830) |
| | I-PIG4 | Antimony-doped tin oxide (manufactured by Merck Performance Materials, trade name:lriotec 8817) |
| Organic pigment | O-PIG1 | Clariant Chemicals Ltd., trade name: PV Fast yellow HG (C.I.Pigment Yellow 180) |
| | O-PIG2 | SUMIKA COLOR CO., LTD., trade name: SUMITONE CYANINE BLUE GH (C.I.Pigment Blue 15:3) |
| | O-PIG3 | BASF Colors & Effects Japan Ltd., trade name: Paliogen Red K3911 (C.I.Pigment Red 178) |
| | O-PIG4 | Manufactured by BASF, trade name: Lumogen Black K0087 |
| Dye | DY1 | Perinone-based dye (C.I. Solvent Red 179) |
| | | Manufactured by ARIMOTO CHEMICAL Co., Ltd., trade name: Plast Red 8370 |
| | DY2 | Anthraquinone-based dye (C.I. Solvent Blue 97) |
| | | Manufactured by Kiwa Chemical Industry Co., Ltd., trade name: KP Plast Blue R |
| | DY3 | Anthraquinone-based dye (C.I. Solvent yellow 163), Manufactured by Kiwa Chemical Industry Co., Ltd., trade name: KP Plast Yellow HK |

### <Preparation of Dye>

The organic dye was weighed and stirred for 5 hours before use.

### <Measurement of Absorbance of Mixture of Two or more kinds of Non-Black Organic Pigments>

The polycarbonate resin (Iupilon "H4000") and various non-black organic pigments were placed in a stainless steel tumbler, and stirred and mixed for 1 hr. The obtained mixture was placed in the main hopper of a 30 mm, vent type twin-screw extruder (manufactured by The Japan Steel Works, Ltd., "TEX30a"), kneaded under the conditions of a screw rotation speed of 200 rpm and a discharge of 40 kg/hr with the extruder barrel set temperatures C1 to C15 at 260°C and the die at 250°C, and extruded in the form of strands to obtain pellets. The obtained pellets were dried at 120°C for 7 hours, and then a 60 mm × 60 mm × 1.5 mm thick plate for transmittance measurement was injection-molded using an injection molding machine ("NEX80-9E" manufactured by NISSEI PLASTIC INDUSTRIAL CO., LTD.) at a cylinder temperature of 260°C and a mold temperature of 60°C under the following injection conditions. For the plate obtained above, the transmittance (%) at a wavelength of 1064 nm was determined using an ultraviolet-visible-near-infrared spectrophotometer.

### 2. Examples 1 to 12 and Comparative Examples 1 to 8

### <Production of Light-Transmissive Resin Composition (Pellets)>

Components other than glass fibers as shown in Tables 3 to 6 were placed in a stainless steel tumbler, and stirred and mixed for 1 hr. The amounts of the components in Tables 3 to 6 are expressed in parts by mass. The obtained mixture was placed in the main hopper of a 30 mm, vent type twin-screw extruder (manufactured by The Japan Steel Works, Ltd., "TEX30α"), and the glass fibers (GF) were supplied from the seventh side feeder from the hopper. The mixture was kneaded under the conditions of a screw rotation speed of 200 rpm and a discharge of 40 kg/hr with the extruder barrel set temperatures C1 to C15 at 260°C and the die at 250°C, and extruded in the form of strands to obtain pellets of a resin composition.

### <Production of Light-Absorptive Resin Composition (Pellets)>

Components other than glass fibers as shown in Table 7 were placed in a stainless steel tumbler and stirred and mixed for 1 hr. The amounts of the components in Table 7 are expressed in parts by mass. The obtained mixture was placed in the main hopper of a 30 mm, vent type twin-screw extruder (manufactured by The Japan Steel Works, Ltd., "TEX30α"), and the glass fibers (GF) were supplied from the seventh side feeder from the hopper. The mixture was kneaded under the conditions of a screw rotation speed of 200 rpm and a discharge of 40 kg/hr with the extruder barrel set temperatures C1 to C15 at 260°C and the die at 250°C, and extruded in the form of strands to obtain pellets of a light-absorptive resin composition.

### <Molding of Plates for Color Tone Measurement and Transmittance Measurement (Transmitting Resin Members)>

The light-transmissive resin composition pellets obtained above were dried at 120°C for 7 hours, and then 60 mm × 60 mm × 1.5 mm thick plates for color tone measurement and transmittance measurement (transmitting resin members) were injection-molded using an injection molding machine ("NEX80-9E" manufactured by NISSEI PLASTIC INDUSTRIAL CO., LTD.) at a cylinder temperature of 260°C and a mold temperature of 60°C under the following injection conditions.

### (Injection Conditions)

Pressure keeping time: 10 sec
Cooling time: 10 sec
Injection speed: 90 mm/sec
Back pressure: 5 MPa
Screw rotation speed: 100 rpm

### <Laser Marking Characteristics>

Laser-marking with a 10 mm × 10 mm square size was made on the central portion of the plate for color tone measurement (transmitting resin member) obtained above under the following conditions. Evaluation was performed on a four-point scale of A to D shown below. The color of the plate and the color of the laser marking (printing) are shown.
Laser marking apparatus: manufactured by Panasonic Corporation, LP-Z310
Type of laser: Yb fiber laser (wavelength 1064 nm)
Laser power: 30
Scan speed: 600 mm/s
Printing pulse period: 50 µs

### <<Evaluation>>

After the laser marking, the visibility of the marked portion with respect to the non-marked portion was checked by visual observation and evaluated according to the following evaluation criteria. The evaluation was performed by five experts, and a determination was made by a majority vote.
A: particularly clear visibility is obtained
B: visibility is obtained at a level at which the marked portion and the non-marked portion can be easily visually distinguished
C: visibility is obtained at a level at which the marked portion and the non-marked portion can be visually distinguished
D: visibility is not obtained

### <<Evaluation of ΔE>>

The color difference ΔE between the laser-marked portion and non-laser-marked portion of the plate obtained above was measured. The measurement was performed using a spectrophotometer in accordance with ISO 7724/1, at D65/10 (reflected illumination, 10° viewing angle) by SCE (specular component excluded) method with a target mask SAV (φ 4 mm).

For the spectrophotometer, CM-3600d) manufactured by KONICA MINOLTA OPTICS, INC. was used.

### <1.5 mmt, Transmittance>

At a point 45 mm from the gate side in the plate (60 mm × 60 mm × 1.5 mm thick) for transmittance measurement obtained above in the central portion of the width of the test plate (non-laser-marked portion), the transmittance (%) at a wavelength of 1064 nm was determined using an ultraviolet-visible-near-infrared spectrophotometer (the transmittance on the side opposite to the gate, G). Also at a point on the gate side, the transmittance (%) at a wavelength of 1064 nm was determined (the transmittance on the side opposite to the gate, G'). The transmittance difference (ΔG - G') was calculated.

For the ultraviolet-visible-near-infrared spectrophotometer, "UV-3100PC" with an integrating sphere manufactured by SHIMADZU CORPORATION was used.

### <Color Tone L*a*b* (SCE) (Transmitting Resin Member, Non-Laser-Marked Portion)>

The color tone L*a*b* (SCE) of the central portion of the plate for color tone measurement (transmitting resin member) obtained above was measured. The measurement was performed using a spectrophotometer in accordance with ISO 7724/1, at D65/10 (reflected illumination, 10° viewing angle) by SCE (specular component excluded) method with a target mask SAV (ϕ 4 mm).

For the spectrophotometer, CM-3600d) manufactured by KONICA MINOLTA OPTICS, INC. was used.

### <Contamination Resistance>

### <<Production of White PBT Plate>>

Polybutylene terephthalate pellets (manufactured by Mitsubishi Engineering-Plastics Corporation, NOVADURAN 5010G30 NA) were dried at 120°C for 7 hours, and then a 60 mm × 60 mm × 1.5 mm thick white PBT plate was injection-molded using an injection molding machine ("NEX80-9E" manufactured by NISSEI PLASTIC INDUSTRIAL CO., LTD.) at a cylinder temperature of 260°C and a mold temperature of 60°C under the following injection conditions.

### <<Color Transfer Test>>

The plate for evaluation (transmitting resin member) (60 mm × 60 mm × 1.5 mm thick) obtained above and the white PBT plate were used. Both plates were held by a clip and placed in a constant temperature oven set at 120°C for 12 hrs, and the color transfer (contamination properties) to the white PBT plate was examined according to the following evaluation criteria. The evaluation was performed by five experts, and a determination was made by a majority vote.

### <<Evaluation>>

A: no color transfer occurs at all
B: a color transfer mark is slightly noted
C: color transfer is clearly noted

### <Degree of Blackness>

The visual tint (black, dark gray, gray, light gray, or white) of the plate for evaluation (transmitting resin member) (60 mm × 60 mm × 1.5 mm thick) obtained above was evaluated. The evaluation was performed by five experts, and a determination was made by a majority vote.

### <Welding Strength (Cup)>

### <<Fabrication of Transmitting Resin Member>>

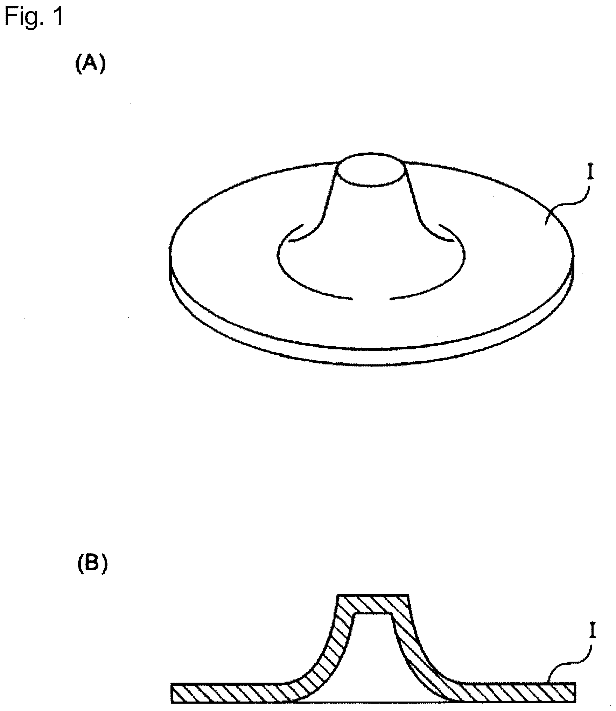

The light-transmissive resin composition (pellets) obtained above were dried at 120°C for 7 hours and then molded using an injection molding machine ("J55" manufactured by The Japan Steel Works, Ltd.) at a cylinder temperature of 260°C and a mold temperature of 60°C to fabricate a 1.5 mm thick molded article (transmitting resin member I) as shown in Figure 1.

### <<Fabrication of Absorbing Resin Member>>

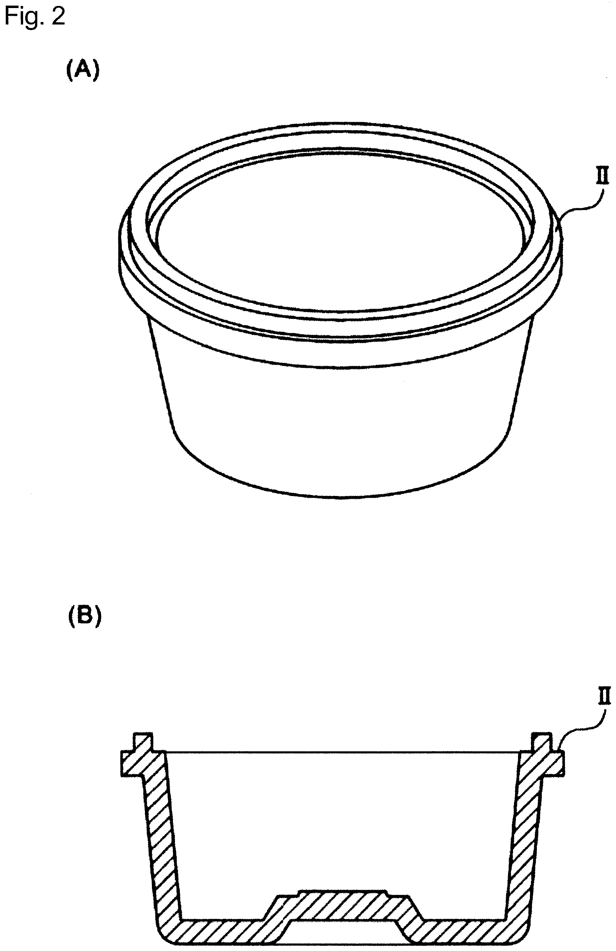

The light-absorptive resin pellets obtained above were dried at 120°C for 7 hours and then molded using an injection molding machine ("J55" manufactured by The Japan Steel Works, Ltd.) at a cylinder temperature of 260°C and a mold temperature of 60°C to fabricate a molded article (absorbing resin member II) as shown in Figure 2.

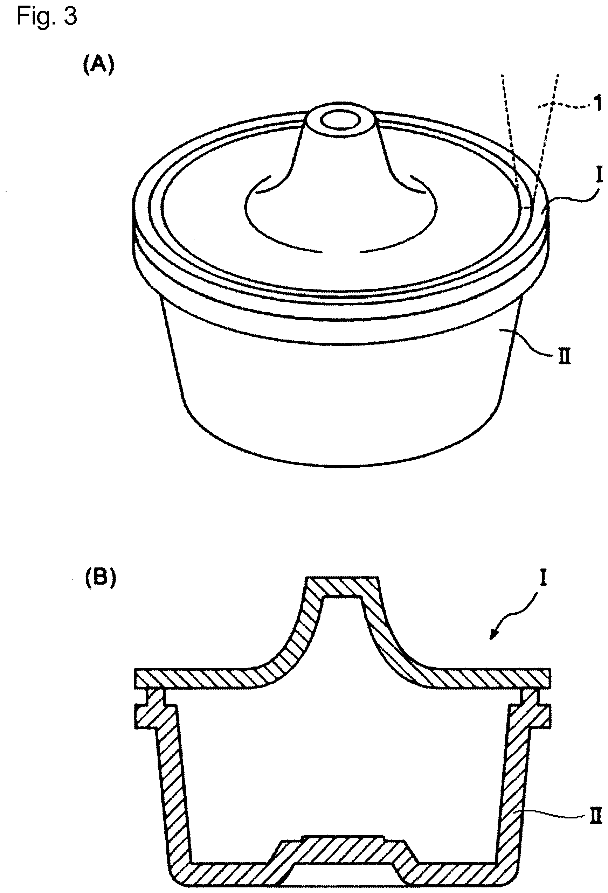

For the transmitting resin member and the absorbing resin member, the lid-like transmitting resin member I was superposed on the box-like absorbing resin member II, as shown in Figure 3, and a laser light source was disposed at a position vertically above the flange portion that was the overlapping portion of the transmitting resin member I and the absorbing resin member II. While a pressing force (extrusion force during welding) of 4.92 N/mm was applied to the overlapping portion of the transmitting resin member I and the absorbing resin member II in inward directions from both sides in the thickness direction using glass plates, a laser was radiated under the following conditions to obtain a laser-welded article.

The welding apparatus is as follows.

### <<Galvano-Scanning Laser Welding>>

Laser apparatus: manufactured by IPG, YLR-300-AC-Y14
Wavelength: 1070 nm
Collimator: 7.5 mm
Laser type: fiber
Laser power: 150 W
Galvano-scanner: Fiber Elephants 21, manufactured by ARGES
Aperture: 21 mm
Laser irradiation speed: 900 mm/s
Number of laser irradiation laps: 30 laps
Circumference of welding portion: 137 mm

Laser light was defocused so that the spot diameter radiated on the welding surface was a diameter of 2 mm. Thus, the position of the laser scanner was adjusted.

### <<Measurement of Laser Welding Strength>>

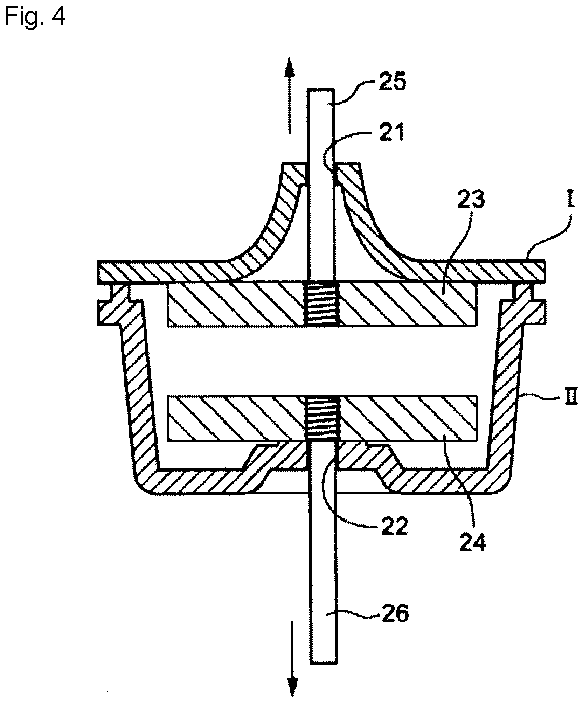

As shown in Figure 4, holes 21 and 22 were made in the transmitting resin member I and the absorbing resin member II, respectively. Jigs 23 and 24 for measuring the welding force were placed inside, and a box composed of the transmitting resin member I and the absorbing resin member II in that state was fabricated. Measurement jigs 25 and 26 were respectively inserted from the upper surface and the lower surface of the box, bonded to the jigs 23 and 24 housed inside, and pulled upward and downward (tensile speed: 5 mm/min), and the strength at which the transmitting resin member I and the absorbing resin member II separate (welding strength) was measured. The unit is expressed in N.

For the measuring apparatus, a 1 t TENSILON universal tester (load cell 10 kN) manufactured by ORIENTEC CO., LTD. was used.

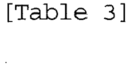

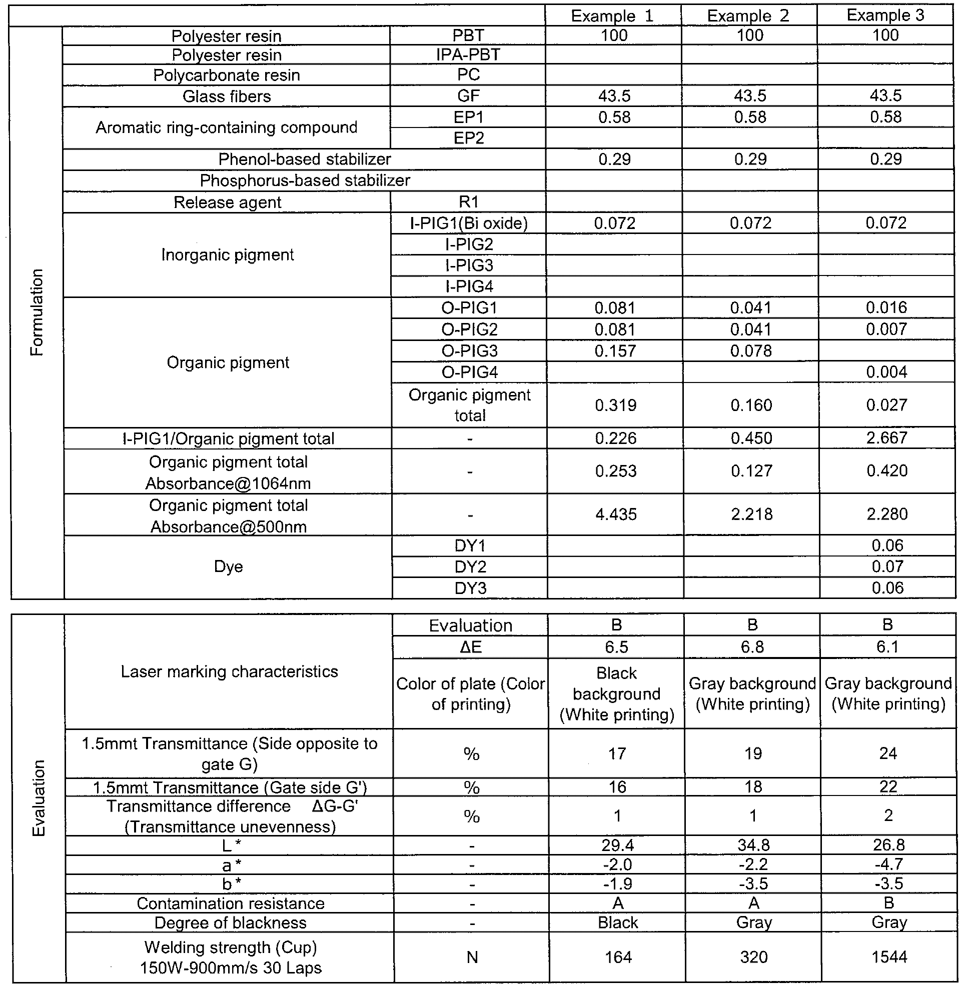

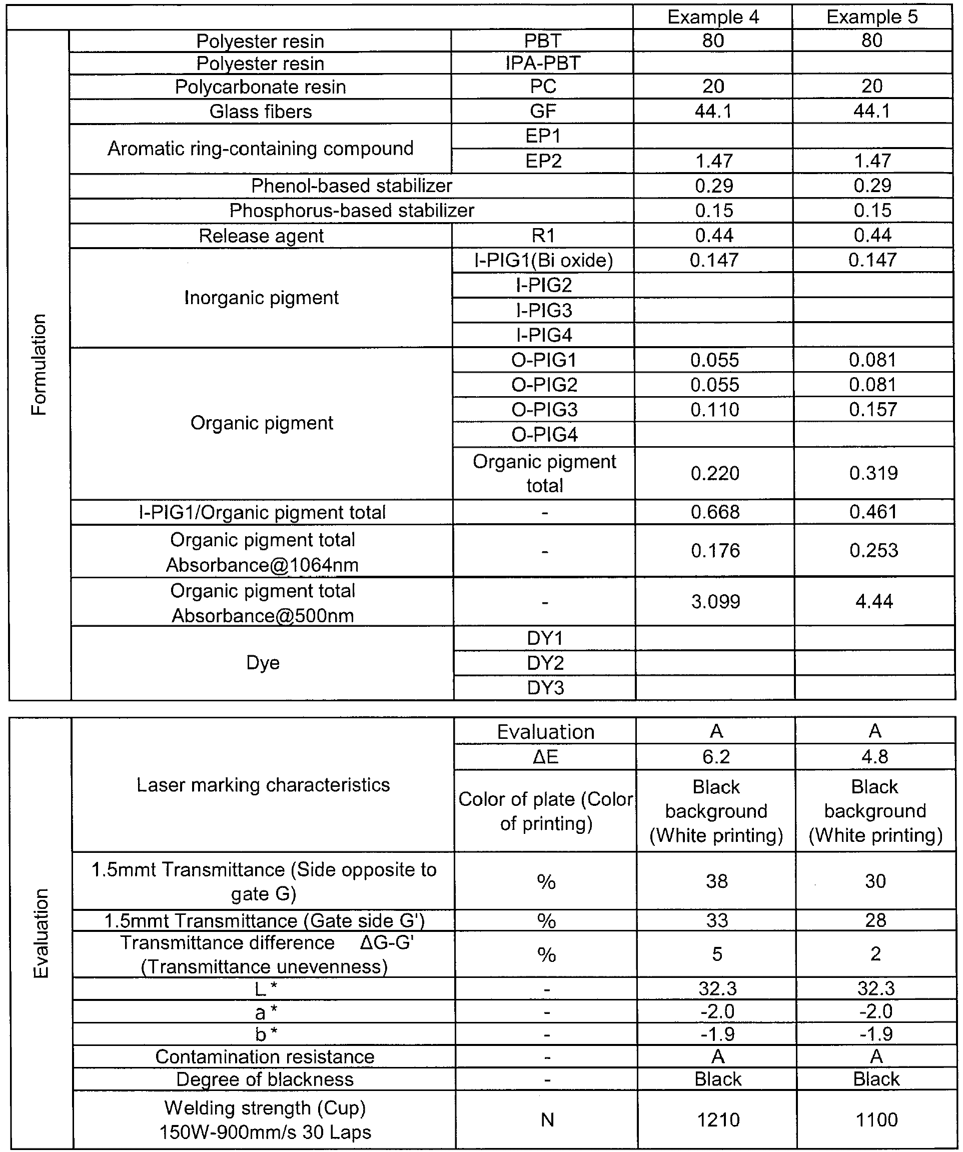

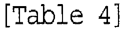

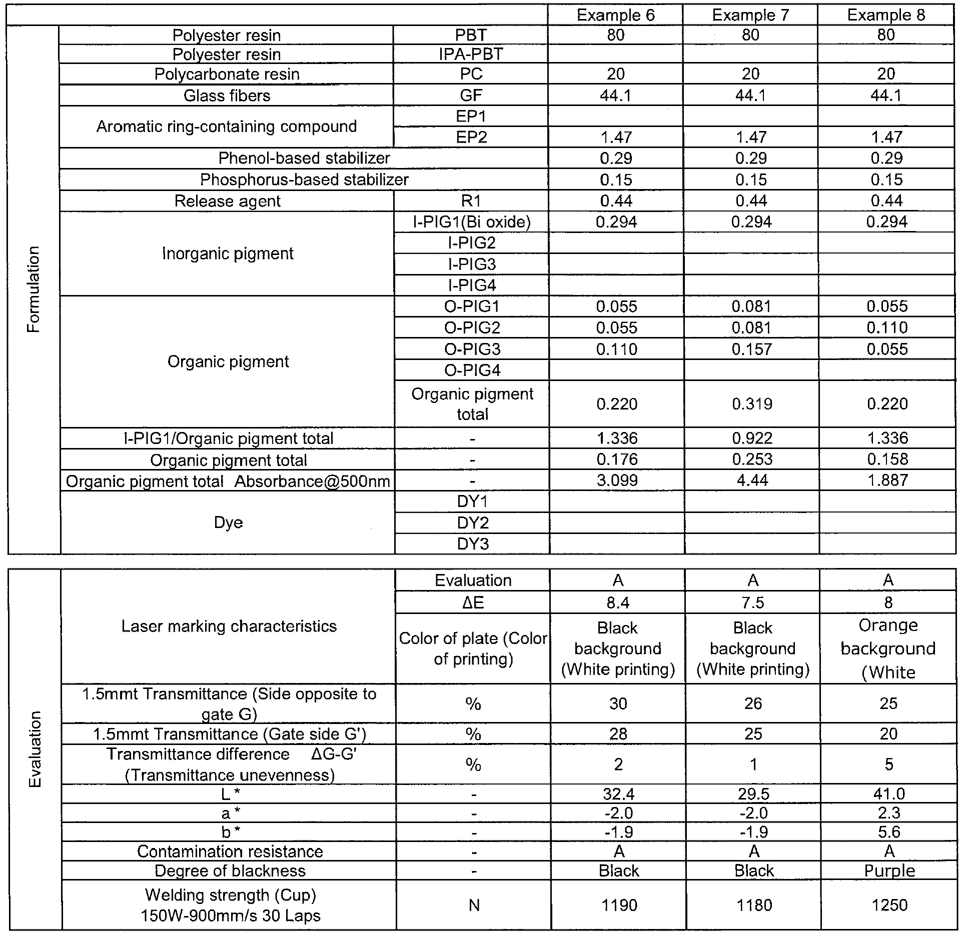

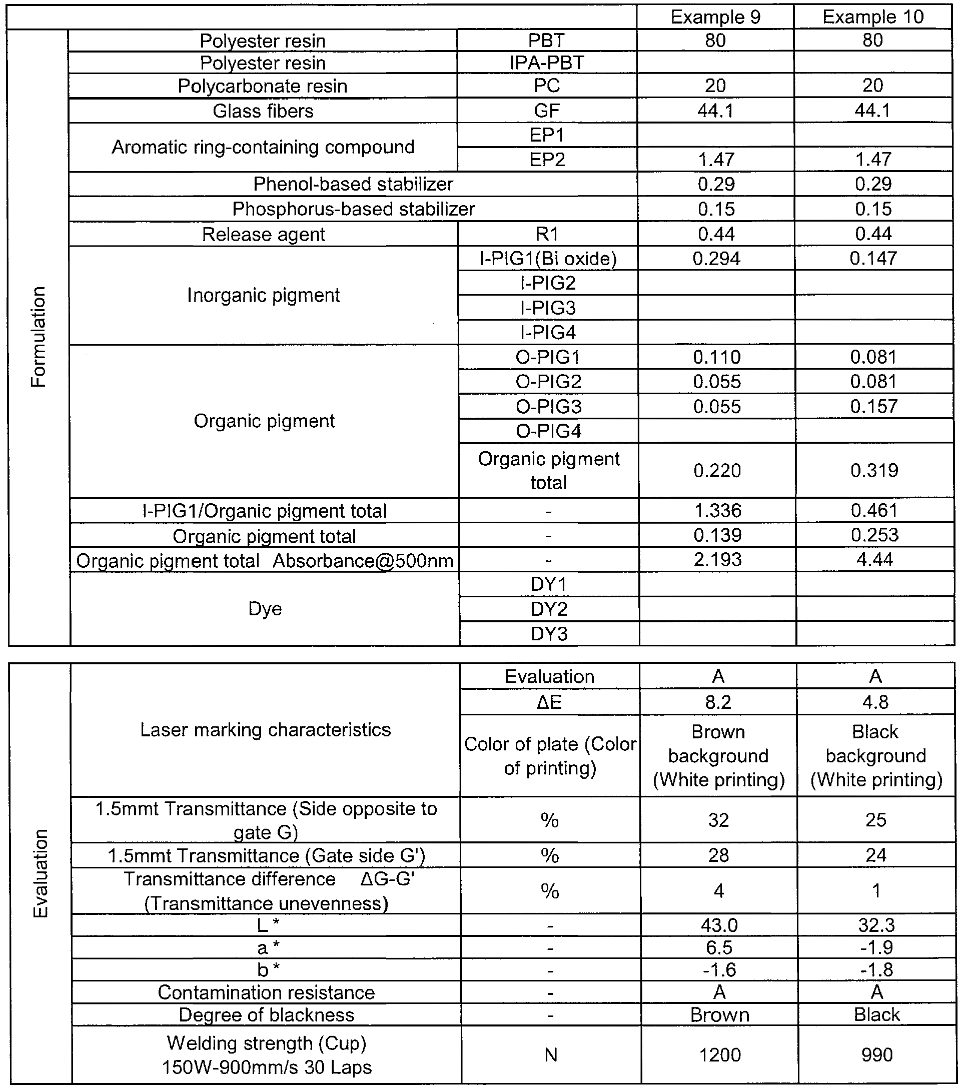

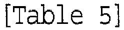

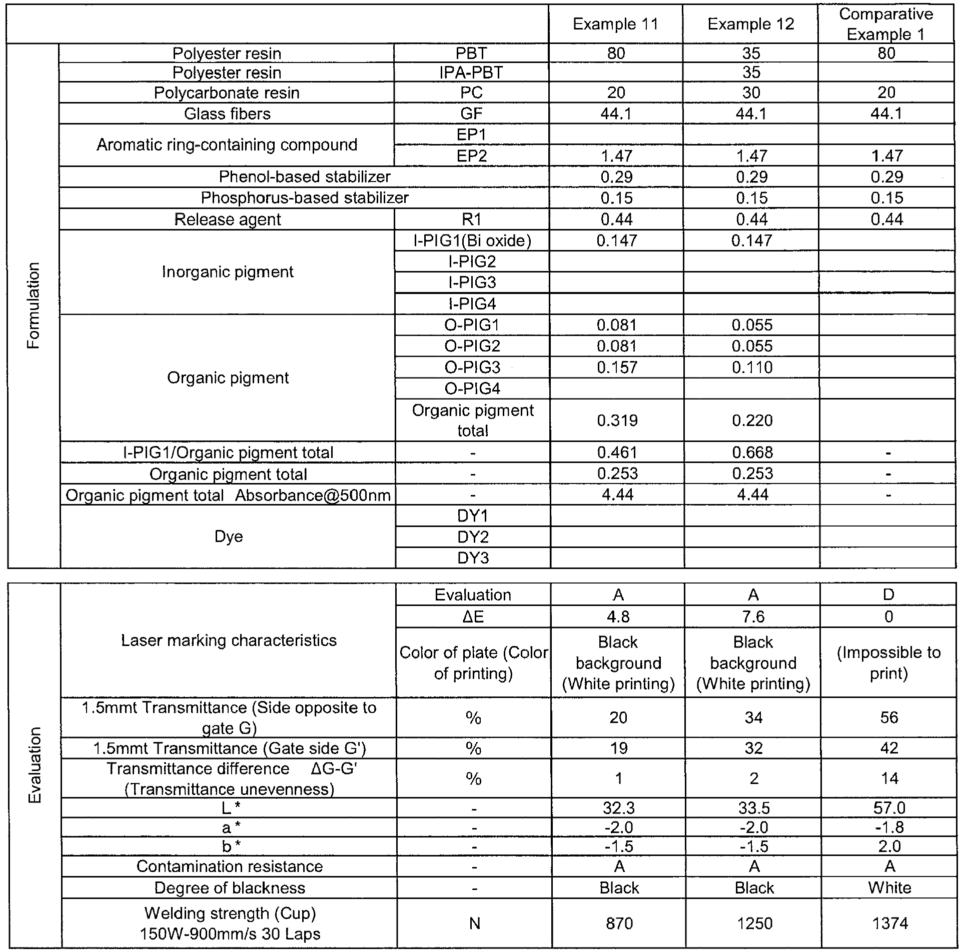

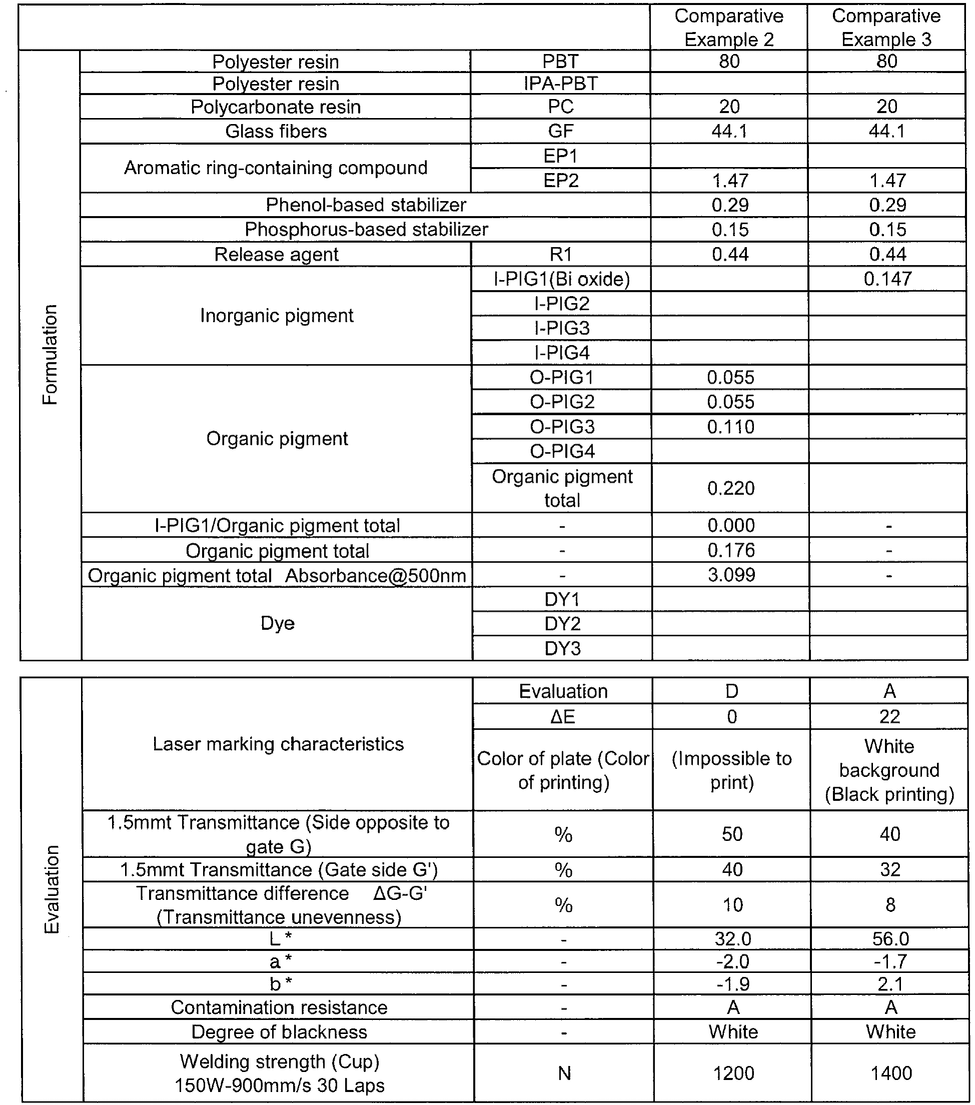

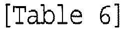

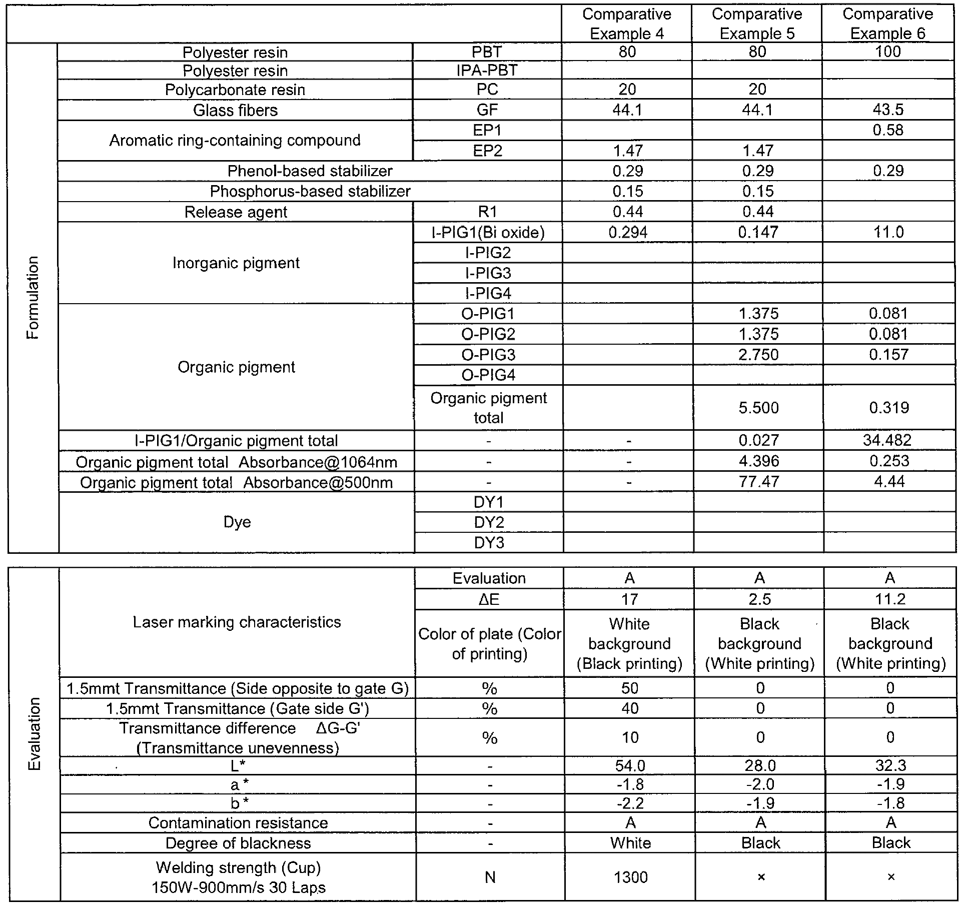

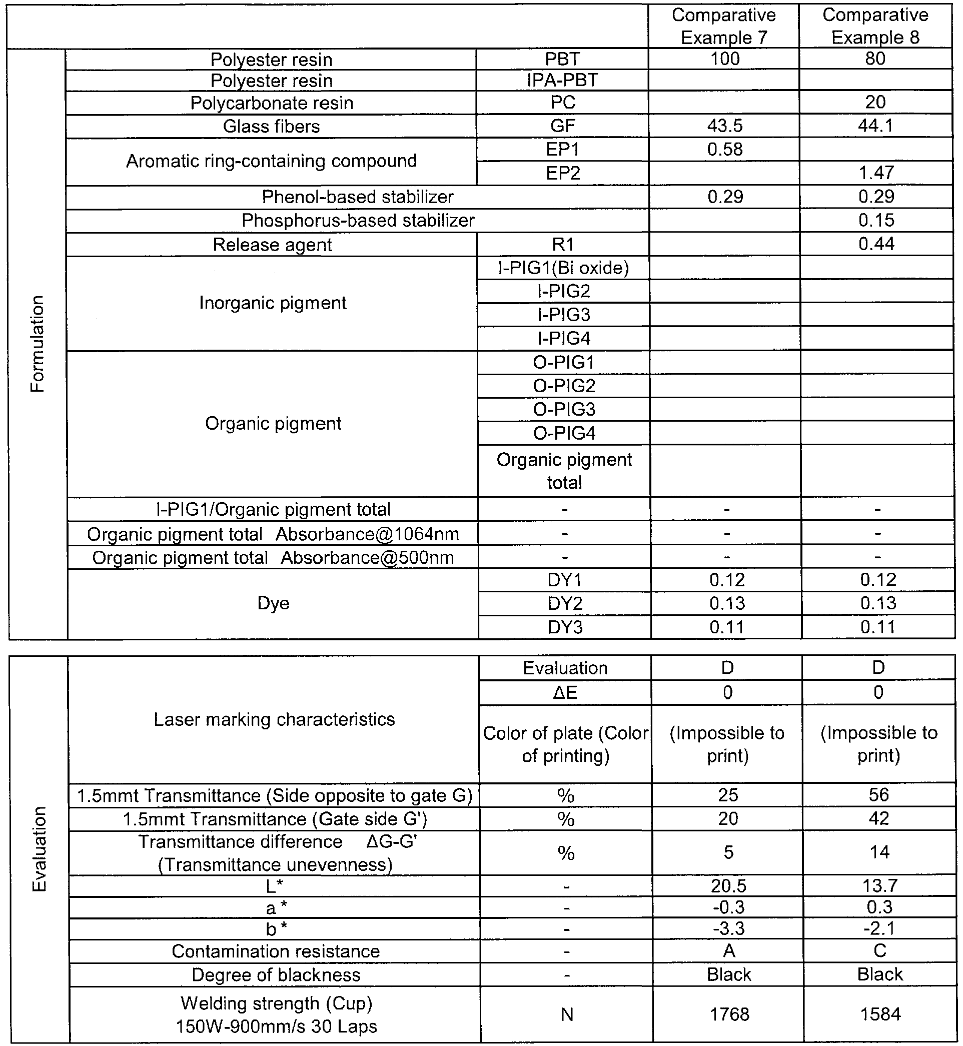

**[Table 7]**

| | | | Absorbing material composition |
|---|---|---|---|
| Absorbing resin member formulation | Polyester resin | PBT | 67 |
| | Glass fibers | GF | 30.00 |
| | Epoxy compound | EP1 | 0.40 |
| | Phenol-based stabilizer | | 0.20 |
| | CB | | 2.00 |

As is clear from the results, the resin compositions of the present invention were excellent in laser transmission properties and laser printability and had suppressed unevenness in transmittance. Excellent laser printability is read from the ΔE being large.

Furthermore, in the resin compositions of the present invention, pigments rather than dyes were blended as coloring matter, and therefore contamination resistance resulting from dyes was suppressed. Furthermore, it was found that even when in addition to organic pigments, organic dyes were used in combination as coloring matter, contamination resistance was also suppressed in good balance while a decrease in transmittance was more reduced.

Further, in the resin compositions of the present invention, even if a bismuth compound that functioned as a laser-marking agent was blended, their transmittance did not decrease much, and therefore combined use with two or more types of non-black pigments was possible. Therefore, the molded articles formed from the resin compositions of this embodiment can have a color to improve the designability. Particularly, it was found that even if bismuth oxide was blended, the molded articles did not blacken due to that, and therefore white molded articles and molded articles having a chromatic color were obtained.

### [Reference Signs List]

21, 22 hole
23, 24 measurement jig
25, 26 measurement jig

## Claims

1. A resin composition for laser marking and for laser welding, comprising 100 parts by mass of a thermoplastic resin, 0.002 to 10.000 parts by mass of a bismuth compound, and 0.1 to 5.0 parts by mass in total of two or more types of non-black organic pigments.

2. The resin composition according to claim 1, wherein a content of the bismuth compound is 0.002 to 1.000 part by mass per 100 parts by mass of the thermoplastic resin.

3. The resin composition according to claim 1 or 2, wherein the thermoplastic resin comprises a thermoplastic polyester resin.

4. The resin composition according to any one of claims 1 to 3, wherein the thermoplastic resin comprises a polybutylene terephthalate resin.

5. The resin composition according to claim 4, wherein the polybutylene terephthalate resin comprises a unit derived from isophthalic acid, and a proportion of the unit derived from isophthalic acid in all units derived from dicarboxylic acid components in the polybutylene terephthalate resin is 0.5 mol % or more and 15 mol % or less.

6. The resin composition according to any one of claims 1 to 5, wherein the thermoplastic resin comprises a polycarbonate resin.

7. The resin composition according to any one of claims 1 to 6, wherein the resin composition is for a laser-transmitting resin member.

8. The resin composition according to any one of claims 1 to 7, wherein a mass ratio between a content of the two or more types of non-black organic pigments and the content of the bismuth compound is 1:0.05 to 10.

9. The resin composition according to any one of claims 1 to 8, wherein a mixture of the two or more types of non-black organic pigments has an absorbance at a wavelength of 1064 nm of 1.0 or less and an absorbance at a wavelength of 500 nm of 1.0 or more.

10. The resin composition according to any one of claims 1 to 9, further comprising, per 100 parts by mass of the thermoplastic resin, 0.1 to 18 parts by mass of an aromatic ring-containing compound comprising a benzene ring and/or a benzo condensed ring in a proportion of 15 to 75% by mass in terms of a molecular weight ratio.

11. The resin composition according to claim 10, wherein the aromatic ring-containing compound is a compound comprising an epoxy group.

12. The resin composition according to claim 10, wherein the aromatic ring-containing compound is a novolac type epoxy compound.

13. The resin composition according to any one of claims 1 to 12, further comprising glass fibers, wherein cross sections of the glass fibers are circular.

14. A molded article formed from the resin composition according to any one of claims 1 to 13.

15. A laser-transmitting resin member formed from the resin composition according to any one of claims 1 to 13.

16. The molded article according to claim 14, wherein the molded article is capable of being laser-marked.

17. The laser-transmitting resin member according to claim 15, wherein the laser-transmitting resin member is capable of being laser-marked.

18. A kit comprising:
the resin composition according to any one of claims 1 to 13; and
a light-absorptive resin composition comprising a thermoplastic resin and light-absorptive coloring matter.

19. A laser-welded article obtained by laser-welding together the laser-transmitting resin member according to claim 15 or 17, and a laser-absorbing resin member formed from a light-absorptive resin composition comprising a thermoplastic resin and light-absorptive coloring matter.

20. A method for producing a laser-welded article, comprising: irradiating the laser-transmitting resin member according to claim 15 or 17 with a laser to laser-mark the laser-transmitting resin member, and
laser-welding together the laser-transmitting resin member and a laser-absorbing resin member formed from a light-absorptive resin composition comprising a thermoplastic resin and light-absorptive coloring matter.

21. The method for producing a laser-welded article according to claim 20, wherein the laser welding is performed by galvano-scanning laser welding.

22. A laser-marking agent for a resin composition for laser welding comprising a thermoplastic resin and two or more types of non-black organic pigments,
the laser-marking agent comprising a bismuth compound.
